# DEMANDE DE BREVET EUROPEEN

(11) **EP 4 844 254 A1**
(43) Date de publication de la demande: **25.11.2026**
(21) Numéro de dépôt: 26179954.8
(22) Date de dépôt: 20.05.2026
(51) Int. Cl.: F16L 37/52

(54) **ELÉMENT DE RACCORD FLUIDIQUE ET RACCORD FLUIDIQUE**

(30) Priorité: 21.05.2025 FR 2505453
(71) Demandeur: Staubli Faverges, 74210 Faverges-Seythenex (FR)
(72) Inventeur: POLLET, Valentin, 74940 ANNECY-LE-VIEUX (FR); MOREL, Frédéric, 74210 LATHUILE (FR); MARQUES BARROCA, Serafim, 73200 ALBERTVILLE (FR); DURIEUX, Christophe, 73200 GILLY SUR ISERE (FR)
(74) Mandataire: Lavoix

(57) **Abrégé**

La présente invention concerne un élément de raccord fluidique (2), comprenant un corps (5), une bride (115), un embout (165). Le corps s'étend suivant un premier axe (X1) et délimite un conduit interne proximal (45), une ouverture (105) et un volume interne (112) fixe les uns par rapport aux autres. Le volume interne reçoit la bride avec une possibilité de déplacement radiale. L'embout, centré sur un troisième axe (X3), est monté radialement solidaire avec la bride, avec une possibilité d'inclinaison de l'embout par rapport à la bride et de déplacement de l'embout par rapport au conduit interne proximal. L'embout est mobile depuis une position inclinée par rapport à la bride jusqu'à une position avancée, où le troisième axe est parallèle au premier axe, l'embout butant contre une surface interne axiale arrière (95) de l'élément de raccord fluidique fixe par rapport au conduit interne proximal.

## Description

La présente invention concerne un élément de raccord fluidique et un raccord fluidique comprenant un tel élément.

Dans le domaine des circuits de refroidissement de composants électroniques, en particulier ceux conçus pour refroidir des installations de serveurs informatiques, il est connu de raccorder, à l'aide d'un ensemble de raccordement, les différents éléments du circuit de refroidissement de manière à établir entre eux une connexion fluidique pour faire circuler un fluide dans le circuit de refroidissement.

L'ensemble de raccordement connu comprend au moins un premier élément de raccord fluidique, par exemple un élément mâle, et au moins un deuxième élément de raccord fluidique complémentaire, par exemple un élément femelle, étant agencé pour être accouplé avec le premier élément de raccord fluidique le long d'un axe principal d'accouplement.

Pour certaines applications de refroidissement, il est nécessaire de pouvoir accoupler « en aveugle », c'est-à-dire sans visibilité, l'élément de raccord fluidique et l'élément de raccord fluidique complémentaire qui peuvent présenter au début de l'accouplement des défauts relatifs d'alignement. L'un ou l'autre des éléments de raccord, ou les deux, comporte une flottabilité angulaire, c'est-à-dire une possibilité de déplacement angulaire, et/ou une flottabilité radiale c'est-à-dire une possibilité de déplacement radial, pour permettre cet accouplement depuis des positions initiales non alignées.

CN102691844B propose un tel élément de raccord comprenant un corps délimitant un conduit interne proximal destiné à être relié à une canalisation et un embout monté dans le corps. L'embout est susceptible d'être déplacé angulairement par rapport au corps grâce à une coopération étanche entre des surfaces sphériques d'une collerette d'embout et d'un anneau sphérique. L'embout est également susceptible d'être déplacé radialement par rapport au corps grâce à la présence d'un espace de débattement de l'embout et de l'anneau dans un volume interne du corps et grâce à l'étanchéité entre le corps et l'anneau sphérique.

Cependant, lorsqu'un élément de raccord à accoupler est monté avec un ou plusieurs autres éléments de raccord à accoupler sur une plaque commune, les embouts peuvent présenter des défauts de positionnement les uns par rapport aux autres le long de l'axe principal d'accouplement. Comme il est nécessaire de garantir une section de passage de fluide dans chaque raccord fluidique après l'accouplement de chacun de ces éléments de **raccord** avec leur élément de raccord complémentaire, il faut également gérer une adaptation et un maintien du contact axial au niveau de chaque couple d'éléments de raccord accouplés.

La construction CN102691844B ne permet pas de déplacement axial de l'embout et doit donc être associée à un dispositif supplémentaire, communément appelé « floating box » ou boîte flottante en français. Une telle boite flottante est divulguée par CN222721841U et permet un déplacement axial de l'embout. Néanmoins, l'association d'une boite flottante à l'élément de raccord de CN102691844B pénalise l'encombrement longitudinal de l'ensemble, ajoute une barrière d'étanchéité supplémentaire, et, dans le cas de CN222721841U, sollicite la canalisation attachée au dispositif supplémentaire puisque celle-ci suit l'ajustement axial et radial du raccord fluidique.

Il est également connu de EP 4 112 989 A1 d'utiliser un élément de couplage fluidique comprenant un boitier centré sur un axe longitudinal, un support monté dans le boitier et mobile radialement dans le boitier. L'élément de couplage comprend également un corps de vanne monté dans le support et inclinable par rapport au support. Cependant, le corps de vanne est fixe par rapport au support le long de l'axe longitudinal. Ainsi, l'élément de couplage permet uniquement de rattraper des défauts d'alignement et/ou d'inclinaison et ne comprend pas de ressort de recentrage du corps de vanne.

L'objectif de l'invention est de proposer une construction d'élément de raccord fluidique avec possibilité de déplacement radial, angulaire et axial, qui soit compacte, qui ne sollicite pas la canalisation et qui comprenne un nombre réduit de barrières d'étanchéité.

A cet effet, l'invention a pour objet un élément de raccord fluidique comprenant :
- un corps, s'étendant suivant un premier axe longitudinal, le corps délimitant :
   ∘ un conduit interne proximal, centré sur le premier axe longitudinal et destiné à être au contact d'un fluide transitant dans l'élément de raccord fluidique,
   ∘ une ouverture, centrée sur le premier axe longitudinal, et
   ∘ un volume interne, centré sur le premier axe longitudinal, débouchant hors du corps par l'ouverture, suivant une direction avant parallèle au premier axe longitudinal, et débouchant dans le conduit interne proximal, suivant une direction arrière opposée à la direction avant, le conduit interne proximal, l'ouverture et le volume interne ayant une position fixe les uns par rapport aux autres,
- une bride, centrée sur un deuxième axe longitudinal parallèle au premier axe longitudinal, la bride étant disposée dans le volume interne du corps avec une possibilité de déplacement par rapport au corps uniquement **radialement** au premier axe longitudinal, ce déplacement radial étant guidé par coopération axiale de la bride avec le corps ;
- un embout, monté avec la bride de sorte à être solidaire avec la bride en déplacement radialement au premier axe longitudinal, avec une possibilité d'inclinaison de l'embout par rapport à la bride, par rapport au deuxième axe longitudinal, l'embout traversant l'ouverture et dépassant partiellement hors du volume interne selon la direction avant, l'embout étant configuré pour être accouplé fluidiquement avec un élément de raccord fluidique complémentaire, l'embout comprenant :
   ∘ un conduit interne distal, traversant l'embout en étant centré sur un troisième axe longitudinal, et
   ∘ une première collerette externe, disposée dans le volume interne du corps ;
- une soupape, montée dans le conduit interne distal en étant mobile par rapport à l'embout selon le troisième axe longitudinal, entre une position de fermeture, où la soupape ferme le conduit interne distal, et une position d'ouverture, où la soupape ouvre le conduit interne distal, la soupape étant en position de fermeture dans une configuration désaccouplée de l'élément de raccord fluidique ;
- un premier ressort, configuré pour repousser la soupape vers la position de fermeture ;
- un premier joint d'étanchéité, interposé radialement entre l'embout et la bride pour assurer un contact étanche entre l'embout et la bride dans toutes les positions de l'embout par rapport à la bride ; et
- un deuxième joint d'étanchéité, interposé axialement entre la bride et le corps, pour assurer un contact étanche entre la bride et le corps dans toutes les positions de la bride par rapport au corps;
l'élément de raccord fluidique étant caractérisé en ce que :
- l'embout est mobile par rapport au corps depuis une position inclinée dans laquelle l'embout est incliné par rapport à la bride jusqu'à une position avancée, dans laquelle :
   ∘ le troisième axe longitudinal est parallèle au premier axe longitudinal, et
   ∘ une surface axiale avant de la première collerette externe est en butée avant contre une surface interne axiale arrière de l'élément de raccord fluidique dont la position le long du premier axe longitudinal est fixe par rapport au conduit interne proximal, l'embout étant en position avancée dans la configuration désaccouplée ;
- l'élément de raccord fluidique comprend un deuxième ressort, configuré pour repousser l'embout par rapport au corps vers la position avancée de l'embout, le deuxième ressort étant en appui arrière sur une surface d'appui appartenant à l'un parmi le corps et la bride, la surface d'appui ayant une position fixe par rapport au conduit interne proximal le long du premier axe longitudinal ; et
- le montage de l'embout avec la bride autorise un déplacement de l'embout par rapport au conduit interne proximal, selon la direction arrière le long du premier axe longitudinal, à l'encontre du deuxième ressort, depuis la position avancée.

Grâce à l'invention, l'embout est susceptible d'être ajusté radialement, angulairement et longitudinalement par rapport au conduit interne proximal et l'élément de raccord fluidique présente un encombrement longitudinal et radial réduit. L'élément de raccord fluidique présente un nombre de barrières d'étanchéité réduit, puisqu'en addition d'un éventuel joint entre la soupape et l'embout en position de fermeture de la soupape, uniquement deux joints sont nécessaires, entre le conduit interne proximal et l'extérieur de l'élément de raccord fluidique. Cela n'empêche pas de prévoir davantage de barrières d'étanchéité en fonction de l'application. De plus, le deuxième ressort repousse l'embout en contact avant avec le corps de l'élément de raccord ou avec l'élément de raccord complémentaire de sorte que la position longitudinale entre les éléments de raccord à accoupler qui seraient montés sur une plaque commune est précise.

Suivant d'autres aspects avantageux de l'invention, l'élément de raccord comprend une ou plusieurs des caractéristiques suivantes, prises isolément ou suivant toutes les combinaisons techniquement possibles :
- un effort du deuxième ressort est appliqué sur l'embout à travers la première collerette externe ;
- l'effort exercé par le deuxième ressort sur l'embout comprend une composante axiale, parallèle au premier axe longitudinal, et une composante radiale, perpendiculaire au premier axe longitudinal, configurée pour, en configuration désaccouplée, recentrer l'embout dans une position neutre dans laquelle le premier axe longitudinal et le troisième axe longitudinal sont alignés ;
- l'embout est disposé dans une cavité interne de la bride, le premier joint d'étanchéité étant en contact radial étanche avec une surface externe d'étanchéité de l'embout, centrée sur le troisième axe longitudinal, et avec une surface interne de la bride, centrée sur le deuxième axe longitudinal et délimitant la cavité interne ;
- le premier joint d'étanchéité est logé dans une gorge interne de la bride ménagée dans une surface cylindrique de la surface interne de la bride, un diamètre interne de la surface cylindrique étant inférieur à un diamètre interne de la surface interne de la bride en arrière de la surface cylindrique ;
- la première collerette externe est disposée hors de la bride, un diamètre de contact radial entre le premier joint d'étanchéité et l'embout étant inférieur à un diamètre externe de la première collerette externe ;
- le deuxième ressort est disposé dans le volume interne, hors de la bride et hors de l'embout ;
- la bride comprend une embase arrière qui coopère axialement, pour le guidage du déplacement radial de la bride dans le corps, avec une première surface interne axiale avant du corps et avec une première surface interne axiale arrière formée sur une collerette radiale interne du corps, et une jupe avant qui s'étend dans la direction avant depuis l'embase arrière, le premier joint d'étanchéité étant logé dans une gorge interne de la jupe avant, la première collerette externe étant disposée à l'avant de la jupe avant ;
- le deuxième ressort et la première collerette externe sont disposés dans la cavité interne de la bride, le deuxième ressort étant en appui arrière contre la bride, le premier joint d'étanchéité étant logé dans l'embout, au niveau d'une surface radiale externe de la première collerette externe ;
- en position avancée de l'embout, la butée avant de l'embout est réalisée contre une surface axiale arrière du corps ;
- une portion de l'embout qui dépasse de l'ouverture dans la direction avant comprend une deuxième collerette radiale externe avec une surface de butée avant apte à être axialement en butée avant, selon la direction avant, avec l'élément de raccord fluidique complémentaire dans une configuration accouplée de l'élément de raccord fluidique ;
- depuis la position avancée de l'embout en configuration désaccouplée, une distance de déplacement selon la direction arrière, de l'embout par rapport au conduit interne proximal, est supérieure ou égale à la valeur d'un déplacement radial maximum de la bride par rapport au corps depuis une configuration dans laquelle le premier axe longitudinal et le troisième axe longitudinal sont alignés, la distance de déplacement étant de préférence au moins égale à 2.5 millimètres, de préférence au moins égale à 3 millimètres ;
- un diamètre de contact radial entre le premier joint d'étanchéité et l'embout est égal à un diamètre d'une surface radiale externe cylindrique d'une extrémité avant de l'embout, la surface radiale externe cylindrique étant configurée pour coopérer de manière étanche avec l'élément de raccord fluidique complémentaire et étant disposée à l'avant de l'ouverture dans toutes les positions de l'embout par rapport au corps.

L'invention concerne également un raccord fluidique comprenant un élément de raccord fluidique tel que défini ci-avant et un élément de raccord fluidique complémentaire comprenant un corps délimitant un conduit interne et un clapet mobile dans le conduit interne de l'élément de raccord fluidique complémentaire entre une position de fermeture et une position d'ouverture du conduit interne de l'élément de raccord fluidique complémentaire, le clapet étant déplacé en position d'ouverture par le corps de l'élément de raccord fluidique et la soupape étant déplacée en position d'ouverture par le corps de l'élément de raccord fluidique complémentaire en configuration accouplée.

Suivant d'autres aspects avantageux de l'invention, le raccord fluidique comprend la caractéristique suivante:
- un effort axial du deuxième ressort est supérieur à un effort axial d'ouverture du clapet et de la soupape en configuration accouplée.

L'invention apparaîtra plus clairement à la lecture de la description qui va suivre, donnée uniquement à titre d'exemple non limitatif, et faite en référence aux dessins dans lesquels :
[Fig. 1] la figure 1 est une coupe longitudinale d'un raccord fluidique comprenant un élément de raccord et d'un élément de raccord fluidique complémentaire selon un premier mode de réalisation de l'invention, les éléments de raccord étant représentés dans une configuration désaccouplée ;
[Fig. 2] La figure 2 est une coupe longitudinale du raccord fluidique de la figure 1, les éléments étant dans une configuration de début d'accouplement avec compensation radiale ;
[Fig. 3] La figure 3 est une coupe longitudinale du raccord fluidique de la figure 1, les éléments étant dans une configuration de début d'accouplement avec compensation angulaire;
[Fig. 4] La figure 4 est une coupe longitudinale du raccord fluidique de la figure 1, les éléments étant dans une configuration accouplée sans surcourse avec compensation angulaire ;
[Fig. 5] La figure 5 est une coupe longitudinale du raccord fluidique de la figure 1, les éléments étant dans une configuration accouplée avec surcourse avec compensation angulaire ;
[Fig. 6] La figure 6 est une coupe longitudinale d'un raccord fluidique comprenant un élément de raccord et d'un élément de raccord fluidique complémentaire selon un deuxième mode de réalisation de l'invention, les éléments de raccord étant représentés dans une configuration désaccouplée ;
[Fig. 7] La figure 7 est une coupe longitudinale du raccord fluidique de la figure 6, les éléments étant dans une configuration accouplée avec surcourse et avec compensation angulaire et radiale;
[Fig. 8] La figure 8 est une coupe longitudinale du raccord fluidique de la figure 6, les éléments étant dans une configuration accouplée avec surcourse et sans compensation angulaire;
[Fig. 9] La figure 9 est une coupe longitudinale d'un raccord fluidique comprenant un élément de raccord et d'un élément de raccord fluidique complémentaire selon un troisième mode de réalisation de l'invention, les éléments de raccord étant représentés dans une configuration désaccouplée ;
[Fig. 10] La figure 10 est une coupe longitudinale du raccord fluidique de la figure 9, les éléments étant dans une configuration de début d'accouplement ;
[Fig. 11] La figure 11 est une coupe longitudinale du raccord fluidique de la figure 9, les éléments étant dans une configuration accouplée sans surcourse et avec compensation radiale et angulaire;
[Fig. 12] La figure 12 est une coupe longitudinale d'un raccord fluidique comprenant un élément de raccord et d'un élément de raccord fluidique complémentaire selon un quatrième mode de réalisation de l'invention, les éléments de raccord étant représentés dans une configuration désaccouplée ;
[Fig. 13] La figure 13 est une coupe longitudinale du raccord fluidique de la figure 12, les éléments étant dans une configuration accouplée avec surcourse et avec compensation angulaire ;
[Fig. 14] La figure 14 est une coupe longitudinale d'un raccord fluidique comprenant un élément de raccord et d'un élément de raccord fluidique complémentaire selon un cinquième mode de réalisation de l'invention, les éléments de raccord étant représentés dans une configuration désaccouplée ;
[Fig. 15] La figure 15 est une coupe longitudinale du raccord fluidique de la figure 14, les éléments étant dans une configuration de début d'accouplement avec compensation radiale;
[Fig. 16] La figure 16 est une coupe longitudinale du raccord fluidique de la figure 14, les éléments étant dans une configuration intermédiaire d'accouplement avec compensation radiale et angulaire ;
[Fig. 17] La figure 17 est une coupe longitudinale du raccord fluidique de la figure 14, les éléments étant dans une configuration accouplée sans surcourse ;
[Fig. 18] La figure 18 est une coupe longitudinale du raccord fluidique de la figure 14, les éléments étant dans une configuration accouplée avec surcourse.

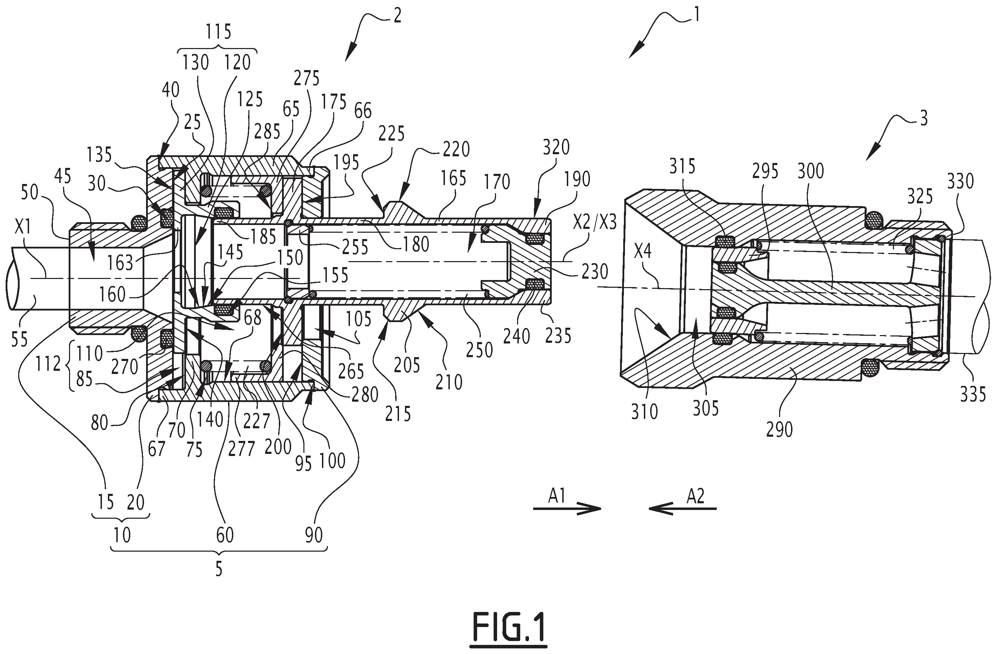

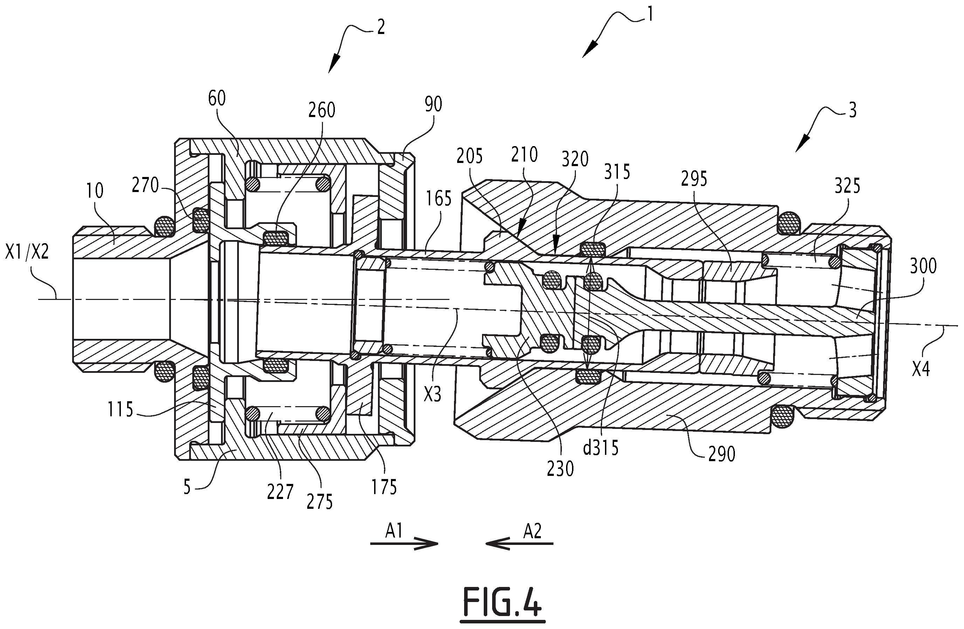

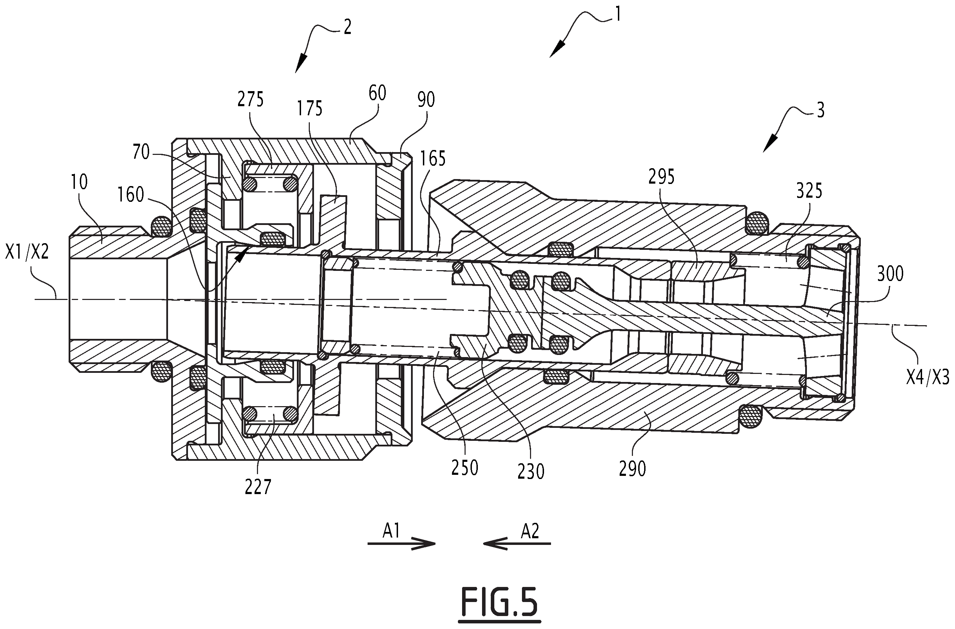

Selon un premier mode de réalisation de l'invention représenté sur les figures 1 à 5, un raccord fluidique 1 comprend un élément de raccord fluidique 2, ici un élément de raccord fluidique mâle, et un élément de raccord fluidique complémentaire 3, ici un élément de raccord fluidique femelle. Sur les figures 4 et 5, l'élément de raccord fluidique complémentaire 3 reçoit en emmanchement l'élément de raccord fluidique 2, en configuration accouplée. Sur la figure 1, l'élément de raccord fluidique 2 n'est pas reçu en emmanchement par l'élément de raccord fluidique complémentaire 3, en configuration désaccouplée.

L'élément de raccord fluidique 2 comprend un corps 5 qui est un corps mâle. Le corps 5 est une pièce de révolution autour d'un axe longitudinal X1. L'axe longitudinal X1 forme un axe central de l'ensemble du corps 5. En d'autres termes, le corps 5 s'étend le long de l'axe longitudinal X1 entre un arrière de corps et un avant de corps selon une direction avant A1 parallèle à l'axe longitudinal X1, définie pour l'élément de raccord fluidique 2.

Pour la présente description, les termes tels que « axial », « radial » et « longitudinal » sont définis par rapport à l'axe central ou longitudinal de la pièce qu'ils concernent. Par exemple, concernant le corps 5, les termes tels que « axial », « radial » et « longitudinal » sont définis par rapport à l'axe longitudinal X1. Dans ce cas, par exemple, une surface axiale du corps 5 s'étend perpendiculairement à l'axe longitudinal X1, une surface radiale du corps 5 s'étend parallèlement à l'axe longitudinal X1 et autour de l'axe longitudinal X1. Les termes tels que « avant » et « distal », lorsqu'ils concernent l'élément de raccord fluidique 2, se rapportent à la direction avant A1. Les termes tels que « arrière » et « proximal », lorsqu'ils concernent l'élément de raccord fluidique 2, se rapportent à une direction arrière A2 opposée à la direction avant A1, définie pour l'élément de raccord fluidique 2. Une « surface avant » est tournée dans la direction avant A1 et une « surface arrière » est tournée dans la direction arrière A2. Les termes tels que « avant » et « distal », lorsqu'ils concernent l'élément de raccord fluidique complémentaire 3, se rapportent à la direction arrière A2 de l'élément fluidique 2. Les termes tels que « arrière » et « proximal », lorsqu'ils concernent l'élément de raccord fluidique complémentaire 3, se rapportent à la direction avant A1 de l'élément fluidique 2.

Le corps 5 comprend une partie proximale 10 formant l'arrière du corps 5.

La partie proximale 10 comprend une portion cylindrique 15 que s'étend autour de l'axe longitudinal X1 et une collerette 20 qui s'étend en saillie de la portion cylindrique 15 perpendiculairement à l'axe longitudinal X1.

La collerette 20 forme une première surface interne axiale avant 25 annulaire et centrée autour de l'axe longitudinal X1.

La première surface interne axiale avant 25 présente une gorge 30 circulaire, centrée sur l'axe longitudinal X1 et configurée pour recevoir un joint d'étanchéité 270.

La première surface interne axiale avant 25 présente une rainure périphérique 40 circulaire et centrée sur l'axe longitudinal X1.

La partie proximale 10 délimite un conduit interne proximal 45 qui est centré et s'étend autour de l'axe longitudinal X1 et qui traverse de part en part la portion cylindrique 15.

Le conduit interne proximal 45 est configuré pour être au contact d'un fluide transitant dans l'élément de raccord 2. Plus précisément, le conduit interne proximal 45 comprend une extrémité arrière 50 destinée à être reliée à un flexible ou une canalisation 55.

Le corps 5 comprend une douille 60. La douille 60 comprend une paroi 65 globalement cylindrique, centrée sur l'axe longitudinal X1 et qui s'étend le long de l'axe longitudinal X1 entre une extrémité avant 66 et une extrémité arrière 67. La paroi 65 comprend une surface radiale interne 68 tournée vers l'axe longitudinal X1.

La douille 60 comprend une collerette radiale interne 70 qui s'étend en saillie de la paroi 65 perpendiculairement à l'axe longitudinal X1 en direction de l'axe longitudinal X1.

La collerette radiale interne 70 présente une surface interne axiale avant 75 et une surface interne axiale arrière 80 opposée à la surface interne axiale avant 75, qui sont deux surfaces annulaires.

La douille 60 est solidarisée à la partie proximale 10 par soudure. Plus précisément, l'extrémité arrière 67 est reçue à jeu radial réduit dans la rainure périphérique 40 ainsi qu'en contact arrière contre la partie proximale 10 et l'extrémité arrière 67 est soudée à la partie proximale 10 grâce à un cordon ou des points répartis le long d'une circonférence radiale externe du contact axial entre la partie proximale 10 et la douille 60. En d'autres termes, la paroi 65 a une forme complémentaire à la rainure périphérique 40.

Lorsque la douille 60 est solidarisée à la partie proximale 10, la première surface interne axiale avant 25 et la surface interne axiale arrière 80 sont en vis-à-vis et délimitent, avec une portion de la surface radiale interne 68 en arrière de la collerette radiale interne 70 selon la direction arrière A2, un volume de réception 85. En d'autres termes, la surface interne axiale avant 25 et la surface interne axiale arrière 80 délimitent longitudinalement le volume de réception 85.

Le corps comprend un couvercle 90 formant l'avant du corps 5. Le couvercle 90 a une forme de disque circulaire centré sur l'axe longitudinal X1.

Le couvercle 90 présente une surface interne axiale arrière 95 et une rainure périphérique 100 circulaire, centrée sur l'axe longitudinal X1 et ménagée dans la surface interne axiale arrière 95.

Le couvercle 90 présente également une ouverture 105 de section circulaire centrée sur l'axe longitudinal X1 et traversant de part en part le couvercle 90 parallèlement à l'axe longitudinal X1.

Le couvercle 90 est monté et solidarisé par soudure à la douille 60. Plus précisément, l'extrémité avant 66 est reçue à jeu radial réduit dans la rainure périphérique 100 ainsi qu'en contact avant contre le couvercle 90 et l'extrémité avant 66 est soudée au couvercle 90 grâce à un cordon ou des points répartis autour d'une circonférence radiale externe du contact axial de la douille 60 et du couvercle 90. En d'autres termes, la paroi 65 a une forme complémentaire à la rainure périphérique 100.

Ainsi, lorsque le corps 5 est assemblé, la partie proximale 10, la douille 60 et le couvercle 90 sont centrés radialement à l'axe longitudinal X1 deux à deux et en butée axiale deux à deux. La surface interne axiale arrière 95 a une position fixe par rapport au conduit interne proximal 45 le long de l'axe longitudinal X1.

Lorsque le corps 5 est assemblé, la surface interne axiale arrière 95, une portion de la surface radiale interne 68 en avant de la collerette radiale interne 70 selon la direction avant A1 et la surface interne axiale avant 75 délimitent un volume interne 110. En d'autres termes, la surface interne axiale avant 75 et la surface interne axiale arrière 95 délimitent longitudinalement le volume interne 110.

Dans cet exemple, le volume interne 110 débouche, selon la direction arrière A2, dans le volume de réception 85 par l'intermédiaire d'un volume radial interne délimité radialement par la collerette radiale interne 70.

Dans cet exemple, une longueur L85 du volume de réception 85, mesurée parallèlement à l'axe longitudinal X1 entre la première surface interne axiale avant 25 et la surface interne axiale arrière 80, est inférieure à une longueur L110 du volume interne 110, mesurée parallèlement à l'axe longitudinal X1 entre la surface interne axiale avant 75 et la surface interne axiale arrière 95. Préférentiellement la longueur L85 est au moins 5 fois inférieure à la longueur L110, dans le cas présent 9 fois inférieure.

Le volume de réception 85, le volume radial interne délimité radialement par la collerette radiale interne 70 et le volume interne 110 forment un volume interne 112 délimité par le corps 5.

Le volume interne 112 est centré sur l'axe longitudinal X1, débouche hors du corps 5 par l'ouverture 105, suivant la direction avant A1 parallèle à l'axe longitudinal X1, et débouche dans le conduit interne proximal 45, en sens opposé, le conduit interne proximal 45, l'ouverture 105 et le volume interne 112 ayant une position fixe les uns par rapport aux autres.

La partie proximale 10, la douille 60 et le couvercle 90 sont dans cet exemple fabriqués dans un acier inoxydable compatible avec la soudure.

L'élément de raccord fluidique 2 comprend une bride 115. La bride 115 est une pièce de révolution.

La bride 115 est centrée sur un axe longitudinal X2 parallèle à l'axe longitudinal X1. La bride est disposée dans le volume interne 110 du corps 5 avec une possibilité de déplacement radial par rapport au corps 5 par rapport à l'axe longitudinal X1. Le déplacement radial de la bride 115 est guidé par coopération axiale de la bride 115 avec le corps 5, de manière à empêcher tout déplacement, au jeu près, suivant l'axe longitudinal X1, et toute inclinaison, au jeu près, par rapport à l'axe longitudinal X1, de la bride 115 par rapport au corps 5.

Avantageusement, la bride 115 comprend une embase arrière 130 qui coopère axialement, pour le guidage du déplacement radial de la bride 115 dans le corps 5, avec la première surface interne axiale avant 25 du corps 5 et la surface interne axiale arrière 80 formée sur la collerette radiale interne 70 du corps 5.

Plus précisément, l'embase arrière 130 est cylindrique et centrée sur l'axe longitudinal X2. L'embase arrière 130 comprend une surface axiale arrière 135 et une surface axiale avant 140, opposées l'une de l'autre et perpendiculaires à l'axe longitudinal X2. L'embase arrière 130 est logée dans le volume de réception 85, la coopération axiale de la bride 115 avec le corps 5 lors du possible déplacement radial de la bride 115 par rapport au corps 5 étant assurée par coopération entre la surface axiale arrière 135 et la première surface interne axiale avant 25 et par coopération entre la surface axiale avant 140 et la surface axiale arrière 80. En particulier, la coopération axiale de la bride 115 avec la première surface interne axiale avant 25 se fait par l'intermédiaire du joint d'étanchéité 270. La coopération axiale de la bride 115 avec le corps 5 assure le guidage du déplacement radial de la bride 115 par rapport au corps 5. La coopération axiale autorise donc uniquement un déplacement de la bride 115 dans le corps 5 selon une direction radiale à l'axe longitudinal X1 mais n'autorise pas de mouvement longitudinal de la bride 115 par rapport au corps 5 ni d'inclinaison de l'axe longitudinal X2 par rapport à l'axe longitudinal X1, au jeu près. Le joint 270 assure l'étanchéité de la coopération entre la bride 115 et le corps 5 dans toutes les positions radiales de la bride 115 par rapport aux corps 5.

L'embase arrière 130 définit un diamètre externe d130, mesuré perpendiculairement à l'axe longitudinal X2 entre deux points diamétralement opposés d'une surface radiale externe de l'embase arrière 130 s'étendant entre la surface axiale arrière 135 et la surface axiale avant 140. En particulier, le diamètre externe d130 correspond au diamètre externe de la surface axiale arrière 135.

Avantageusement, la bride 115 comprend une jupe avant 120 qui s'étend depuis l'embase arrière 130 selon la direction avant A1. En d'autres termes, la surface axiale avant 140 est disposée radialement autour de la jupe 120.

La jupe 120 est cylindrique et centrée autour de l'axe longitudinal X2. La jupe 120 s'étend depuis le logement de réception 85 dans le volume interne 110.

Avantageusement, la bride 115 est traversée de part en part, parallèlement à l'axe longitudinal X2, par une cavité interne 125 centrée sur l'axe longitudinal X2. La cavité interne 125 est délimitée par une surface interne 145 de la bride 115. Plus précisément, la jupe 120 et l'embase arrière 130 sont traversées de part en part par la cavité interne 125.

La jupe 120 comprend une surface cylindrique 150 qui s'étend parallèlement à l'axe longitudinal X2 autour de l'axe longitudinal X2 et qui est une portion de la surface interne 145. Avantageusement, la jupe 120 présente une gorge interne 155 ménagée dans la surface cylindrique 150.

Avantageusement, un diamètre interne d115 de la surface interne 145 de la bride 115, mesuré perpendiculairement à l'axe longitudinal X2 entre deux points diamétralement opposés de la surface interne 145, est augmenté en arrière de la surface cylindrique 150 selon la direction avant A1.

En d'autres termes, le diamètre interne d115 mesuré au niveau de la surface cylindrique 150, en dehors de la gorge interne 155, est inférieur à un diamètre interne d115 mesuré en arrière de la surface cylindrique 150 selon la direction arrière A2.

Dans cet exemple, la surface interne 145 comprend, à partir d'une extrémité arrière, selon la direction arrière A2, de la surface cylindrique 150, une portion de surface 160 inclinée et orientée vers un arrière de l'élément de raccord fluidique 2 selon la direction arrière A2. En d'autres termes, un diamètre interne de la portion de surface 160 est croissant dans la direction arrière A2 et supérieur au diamètre interne d115 mesuré avant la gorge interne 155.

L'élément de raccord fluidique 2 comprend un embout 165, monté avec la bride 115 de sorte à être solidaire avec la bride 115 en déplacement radialement à l'axe longitudinal X2 avec une possibilité d'inclinaison de l'embout 165 par rapport à la bride 115, par rapport à l'axe longitudinal X2. Cette inclinaison de l'embout 165 par rapport à la bride 115, donc de l'axe longitudinal X3 par rapport à l'axe longitudinal X2 est de 5° maximum, de préférence de 4° maximum. L'embout 165 traverse l'ouverture 105 et dépasse partiellement hors du corps 5 selon la direction avant A1. Le diamètre de l'ouverture 105 est choisi de manière à ne pas gêner le déplacement radial de l'embout 165 dans le corps 5.

L'embout 165 est configuré pour être accouplé fluidiquement avec l'élément de raccord fluidique complémentaire 3. L'embout 165 comprend un conduit interne distal 170, traversant l'embout 165 en étant centré sur un axe longitudinal X3, et une collerette externe 175, disposée dans le volume interne 112 du corps 5.

Plus précisément, l'embout 165 est une pièce de révolution tubulaire, centrée autour de l'axe longitudinal X3 et délimitée par une paroi radiale externe 180. La paroi radiale externe 180 s'étend parallèlement à l'axe longitudinal X3, entre une extrémité arrière 185 et une extrémité avant 190 de l'embout 165. L'embout 165 est traversé de part en part par le conduit interne distal 170. Le conduit interne distal 170 communique fluidiquement avec le conduit interne proximal 45 dans toutes les configurations de l'élément de raccord fluidique 2.

La collerette externe 175 s'étend radialement en saillie de la paroi radiale externe 180 perpendiculairement à l'axe longitudinal X3 en direction opposée à l'axe longitudinal X3. La collerette externe 175 est distante longitudinalement de l'extrémité arrière 185 et de l'extrémité avant 190. En d'autres termes, la collerette externe 175 est positionnée entre les extrémités arrière et avant 185 et 190 le long de l'axe longitudinal X3.

La collerette externe 175 comprend une surface avant axiale 195 et une surface axiale arrière 200 qui sont annulaires et centrées sur l'axe longitudinal X3.

Un diamètre externe d175 de la collerette externe 175, mesuré perpendiculairement à l'axe longitudinal X3 entre deux points diamétralement opposés de la collerette externe 175, est inférieur au diamètre d130.

Avantageusement, l'embout 165 comprend une collerette radiale externe 205 qui s'étend radialement en saillie de la paroi radiale externe 180 perpendiculairement à l'axe longitudinal X3 en direction opposée à l'axe longitudinal X3. La collerette radiale externe 205 est positionnée entre la collerette externe 175 et l'extrémité avant 190 le long de l'axe longitudinal X3. La collerette radiale externe 205 est représentée monobloc avec la collerette externe 175 sur les figures 1 à 5.

La collerette radiale externe 205 comprend une surface inclinée avant 210, une surface inclinée arrière 215, une surface radiale externe cylindrique 220 reliant la surface inclinée avant 210 à la surface inclinée arrière 215 et une surface axiale arrière 225. La surface inclinée arrière 215 est disposée longitudinalement entre la surface radiale externe cylindrique 220 et la surface axiale arrière 225.

Avantageusement, l'embout 165 est partiellement disposé dans la cavité interne 125 de la bride 115.

La disposition de l'embout 165 dans la cavité interne 125 assure une compacité radiale de l'élément de raccord fluidique 2.

Avantageusement, la collerette externe 175 est disposée hors de la bride 115.

Avantageusement, la collerette externe 175 est disposée à l'avant de la jupe 120.

Dans cet exemple, l'extrémité arrière 185 est logée dans la cavité interne 125 et la collerette externe 175 est disposée dans le volume interne 110 mais hors de la bride 115. L'embout 165 traverse également l'ouverture 105 du couvercle 90 du corps 5. Ainsi une portion de l'embout 165 est disposée dans le volume interne 112 du corps 5 tandis qu'une autre portion de l'embout 165 comprenant l'extrémité avant 190 et la collerette radiale externe 205, est disposée hors du corps 5 et dépasse vers l'avant, selon la direction avant A1, par rapport au couvercle 90.

L'embout 165 est mobile par rapport au corps 5 le long de l'axe longitudinal X1 depuis une position inclinée de l'embout 165 par rapport à la bride 115, dans laquelle l'axe longitudinal X3 est incliné par rapport à l'axe longitudinal X1, jusqu'à une position avancée dans laquelle l'axe longitudinal X3 est parallèle à l'axe longitudinal X1 et dans laquelle la surface axiale avant 195 de la collerette externe 175 est en butée avant contre une surface axiale arrière appartenant à l'un parmi le corps 5 et la bride 115, cette surface axiale arrière ayant une position fixe par rapport au conduit interne proximal 45 le long de l'axe longitudinal X1, l'embout 165 étant en position avancée dans la configuration désaccouplée.

Avantageusement, en position avancée de l'embout 165, la butée avant de l'embout 165 est réalisée contre la surface interne axiale arrière 95 du corps 5.

Plus précisément, lorsque l'embout 165 est dans sa position avancée, la surface axiale avant 195 est en butée contre la surface interne axiale arrière 95 du couvercle 90. En d'autres termes, dans cet exemple, la collerette externe 175 est en butée avant, lorsque l'embout 165 est en position avancée, contre le corps 5. Ainsi, la position avancée est positionnée avec précision par rapport au corps 5.

Lorsque l'embout 165 est en position avancée, l'embout 165 peut se déplacer radialement par rapport au corps 5 sans se déplacer longitudinalement, et en particulier sans reculer. En d'autres termes, la flottabilité radiale de l'embout 165 est dissociée de la flottabilité axiale de l'embout 165. Cette dissociation est possible grâce au contact surfacique plan entre l'embout 165 et le couvercle 90 en position avancée de l'embout 165 et au déplacement uniquement radial de la bride 115 dans le corps 5.

L'élément de raccord fluidique 2 comprend un ressort 227, configuré pour repousser l'embout 165 par rapport au corps 5 suivant la direction avant A1 vers la position avancée de l'embout 165, le ressort 227 étant en appui arrière sur une surface d'appui appartenant à l'un parmi le corps 5 ou la bride 115, la surface d'appui ayant une position fixe par rapport au conduit interne proximal 45 le long de l'axe longitudinal X1.

Dans cet exemple, le ressort 227 est un ressort hélicoïdal de compression, centré sur l'axe longitudinal X1. Le ressort 227 est logé dans le volume de réception 110, le ressort 227 étant en appui arrière contre le corps 5. Plus précisément, la surface axiale avant 75 de la collerette interne 70 forme la surface d'appui du ressort 227.

Le montage de l'embout 165 avec la bride 115 autorise un déplacement de l'embout 165 par rapport au conduit interne proximal 45, en sens opposé de la direction avant A1 le long de l'axe longitudinal X1, à l'encontre du deuxième ressort 227, depuis la position avancée. Ce déplacement est tel que la surface axiale avant 195 n'est plus en contact avec la surface interne axiale arrière 95 du couvercle 90. Avantageusement, l'effort F du ressort 227 est appliqué sur l'embout 165 à travers la collerette externe 175.

L'application de l'effort F du ressort 227 sur l'embout 165 peut être réalisé de manière directe, c'est-à-dire que le ressort 227 est directement en appui contre la collerette externe 175, ou de manière indirecte, c'est-à-dire que le ressort 227 est en appui contre une pièce de l'élément de raccord 2 qui est elle-même en appui contre la collerette externe 175.

Ici, l'effort F du ressort 227 comprend une composante axiale, parallèle à l'axe longitudinal X1.

Avantageusement, le ressort 227 est disposé dans le volume interne 110, hors de la bride 115 et hors de l'embout 165.

Le ressort 227 étant agencé dans le volume interne 110, il est à l'écart du flux principal de fluide, et à effort axial de ressort équivalent, le rappel de l'embout 165 en position non inclinée est particulièrement efficace car appliqué sur la collerette externe 175 à distance radiale de l'axe longitudinal X3.

L'élément de raccord fluidique 2 comprend une soupape 230 montée dans le conduit interne distal 170 en étant mobile par rapport à l'embout 165 selon l'axe longitudinal X3, entre une position de fermeture, où la soupape 230 ferme le conduit interne distal 170, et une position d'ouverture, où la soupape 230 ouvre le conduit interne distal 170, la soupape 230 étant en position de fermeture dans une configuration désaccouplée de l'élément de raccord 2.

Plus précisément, la soupape 230 est logée dans le conduit interne distal 170. Lorsque la soupape 230 est dans la position de fermeture, la soupape 230 est en butée avant contre une protubérance 235 de l'extrémité avant 190 de l'embout 165 en saillie interne dans le conduit interne distal 170 et la soupape 230 coopère de manière étanche, grâce à un joint d'étanchéité 240 du type joint torique en élastomère, logé dans la soupape 230, avec l'extrémité avant 190 de l'embout 165. Lorsque la soupape 230 est dans la position d'ouverture, la soupape est reculée, dans la direction arrière A2, par rapport à la position de fermeture et autorise le passage de fluide à travers l'extrémité avant 190 et le conduit interne distal 170.

L'élément de raccord fluidique 2 comprend un ressort 250 configuré pour repousser la soupape 230 vers la position de fermeture. Le ressort 250 prend appui sur la soupape 230 et sur une bague interne 255, montée en butée arrière contre l'embout 165, par l'intermédiaire d'un segment d'arrêt, dans le conduit interne distal 170.

L'élément de raccord fluidique 2 comprend un joint d'étanchéité 260, interposé radialement entre l'embout 165 et la bride 115 pour assurer un contact étanche entre l'embout 165 et la bride 115 dans toutes les positions de l'embout 165 par rapport à la bride 115.

Le joint 260 est un joint du type joint torique en élastomère. La bride 115 et l'embout 165 sont solidaires radialement à l'axe longitudinal X1, par l'intermédiaire du joint 260.

Dans cet exemple, le joint 260 est disposé radialement, et uniquement radialement, c'est-à-dire qu'il n'y a pas de compression axiale du joint 260 entre la bride 115 et l'embout 165. Ainsi, le joint 260 assure l'étanchéité de la coopération entre la bride 115 et l'embout 165 dans toutes les positions angulaires de l'embout 165 par rapport à la bride 115 lorsque l'axe longitudinal X3 est incliné ou non incliné par rapport à l'axe longitudinal X1.

Avantageusement, le joint 260 est en contact radial avec une surface externe d'étanchéité 265 de l'embout 165, centrée sur l'axe longitudinal X3, et avec la surface interne 145 de la bride 115, centrée sur l'axe longitudinal X2. La surface externe d'étanchéité 265 est une surface externe de la paroi radiale externe 180 qui s'étend radialement à l'axe longitudinal X3.

Avantageusement, le joint 260 est logé dans la gorge interne 155 de la jupe 120.

Ainsi, la compacité longitudinale de l'élément de raccord fluidique 2 est réduite.

Avantageusement, un diamètre de contact radial d260 entre le joint 260 et l'embout 165, mesuré perpendiculairement à l'axe longitudinal X3 entre deux points de contact entre le joint 260 et l'embout 165 diamétralement opposés, est inférieur au diamètre externe d175 de la collerette externe 175. En particulier, le diamètre de contact radial d260 est au moins 1,5 fois inférieur au diamètre externe d175 de la collerette externe 175.

Ainsi, la compacité de l'élément de raccord fluidique 2 est réduite.

De plus, l'étanchéité entre l'embout 165 et la bride 115 sur la surface externe d'étanchéité 265 de diamètre inférieur au diamètre d175 de la première collerette externe 175 et de diamètre sensiblement égal au diamètre externe de l'extrémité avant 190 de l'embout 165 permet de réduire le différentiel d'étanchéité lorsque l'extrémité avant 190 de l'embout 165 est en contact étanche avec l'élément de raccord complémentaire 3 et que la soupape 230 est ouverte.

L'élément de raccord fluidique 2 comprend le joint d'étanchéité 270, interposé axialement entre la bride 115 et le corps 5, le joint 260, le joint 270 et la soupape 230 en position de fermeture assurant ensemble une étanchéité entre le conduit interne proximal 45 et un extérieur de l'élément de raccord fluidique 2.

En d'autres termes, le joint 270 forme une barrière d'étanchéité entre le corps 5 et la bride 115. L'embase arrière 130 présente une collerette radiale interne 163 qui prolonge la surface axiale arrière 135 et qui est traversée par la cavité interne 125. La collerette radiale interne 163 permet à la bride 115 de rester en contact étanche contre le joint 270 lors d'un déplacement radial maximum de la bride 115 par rapport à l'axe longitudinal X1 du corps 5.

Dans cet exemple, l'élément de raccord fluidique 2 comprend une bague d'appui 275. La bague d'appui 275 est montée autour de l'embout 165 dans le volume interne 110 et est interposée entre le ressort 227 et la collerette externe 175. La bague d'appui 275 coopère à jeu radial réduit avec la surface radiale interne 68 de la douille 60. Ainsi la bague d'appui 275 est mobile le long de l'axe longitudinal X1 par rapport au corps 5 mais n'est pas mobile par rapport au corps 5 radialement à l'axe longitudinal X1. La bague d'appui 275 est percée de part en part de manière à ne pas gêner le déplacement radial de l'embout 165 dans le corps 5.

La bague d'appui 275 comprend une collerette interne 280 qui s'étend radialement à l'axe longitudinal X1 en direction de l'axe longitudinal X1. La collerette interne 280 est en appui surfacique contre la collerette externe 175 en configuration désaccouplée.

Dans cet exemple, le ressort 227 prend appui sur une surface axiale arrière 285 de la collerette interne 280 de la bague d'appui 275. Le ressort 227 repousse élastiquement la bague d'appui 275 vers l'avant selon la direction avant A1. En d'autres termes, l'effort F du ressort 227 est transmis indirectement à la collerette externe 175 par l'intermédiaire de la collerette interne 280. Ainsi les efforts appliqués sur le ressort 227 radialement à l'axe longitudinal X1 lors des mouvements de l'embout radiaux à l'axe longitudinal X1 sont limités ce qui limite la déformation radiale du ressort 227.

En configuration désaccouplée, la bague d'appui 275 coopère de manière surfacique avec la surface axiale arrière 185 de la collerette externe 175. Cela permet une meilleure répartition de l'effort F du ressort 227 sur la collerette externe 175. La surface axiale avant 195 de la collerette externe 175 coopère de manière surfacique avec la surface interne axiale arrière 95. En d'autres termes, la collerette externe 175 est en contact surfacique avec la bague d'appui 275 et le couvercle 90. Ainsi, un parallélisme des axes longitudinaux X1 et X2 est assuré puisque chacune des surfaces de contact s'étend radialement à l'un des deux axes X1 ou X3.

En configuration désaccouplée, lorsque l'embout 165 est en position avancée, une distance axiale L275, mesurée parallèlement à l'axe longitudinal X1 entre une extrémité arrière 277 de la bague d'appui 275 et la collerette interne 70 est inférieure à une distance L185, mesurée parallèlement à l'axe longitudinal X1, entre l'extrémité arrière 185 et une surface interne avant 510 de la collerette radiale interne 163 en regard longitudinal de l'extrémité arrière 185. En d'autres termes, la possibilité de recul de l'embout 165, selon la direction arrière A2, est limitée par la mise en butée de l'embout 165 contre la surface interne avant 510 de la bride 115 le long de l'axe longitudinal X1 selon la direction arrière A2.

L'élément de raccord fluidique complémentaire 3 comprend un corps 290 complémentaire femelle et un clapet sous la forme d'un tiroir 295.

Le corps 290 est une pièce de révolution centrée autour d'un axe longitudinal X4. Le corps 290 est transpercé, de part en part, longitudinalement par un conduit interne 305 qui débouche du corps 290, selon la direction arrière A2, par une embouchure conique 310. En d'autres termes, le corps 290 délimite le conduit interne 305. Un piston 300 est monté dans le corps 290, centré sur l'axe longitudinal X4, sans possibilité de déplacement longitudinal par rapport au corps 290, au jeu près.

Le tiroir 295 est monté mobile dans le conduit interne 305 autour du piston 300 et par rapport au corps 290 entre une position de fermeture du conduit interne 305 et une position d'ouverture du conduit interne 305.

Dans la position de fermeture, le tiroir 295 coopère de manière étanche avec le corps 290 et avec le piston 300. Le corps 290 loge un joint d'étanchéité 315 de l'élément de raccord fluidique complémentaire 3, par exemple un joint torique en élastomère, qui, en position de fermeture du tiroir, est configuré pour coopérer avec le tiroir 295 et qui, en configuration accouplée, est configuré pour coopérer avec une surface radiale externe cylindrique 320 de l'extrémité avant 190 de l'embout 165, la surface radiale externe cylindrique 320 étant configurée pour coopérer de manière étanche avec l'élément de raccord fluidique complémentaire 3.

Le piston 300 loge un joint d'étanchéité de l'élément de raccord fluidique complémentaire 3, par exemple un joint torique en élastomère, qui, en position de fermeture du tiroir 295, est configuré pour coopérer avec le tiroir 295.

L'élément de raccord fluidique complémentaire 3 comprend un ressort 325 qui repousse le tiroir 295 dans sa position de fermeture.

Une extrémité 330 du corps 290, opposée à l'embouchure conique 310 le long de l'axe longitudinal X3, est destinée à être reliée à un flexible ou une canalisation 335, uniquement représenté sur la figure 1 par soucis de lisibilité.

Lors de l'accouplement, l'élément de raccord 2 est rapproché de l'élément de raccord femelle 3 le long un axe d'emmanchement parallèle à l'axe longitudinal X1. Les axes longitudinaux X1 et X4 ne sont pas alignés et sont inclinés l'un par rapport à l'autre. L'embout 165 est introduit dans l'embouchure conique 310 du corps 290.

La présence de l'embouchure conique 310 assure la possibilité d'engager et de guider l'embout 165 dans le corps 290 malgré un défaut initial d'inclinaison et/ou un défaut radial entre les axes X3 et X4.

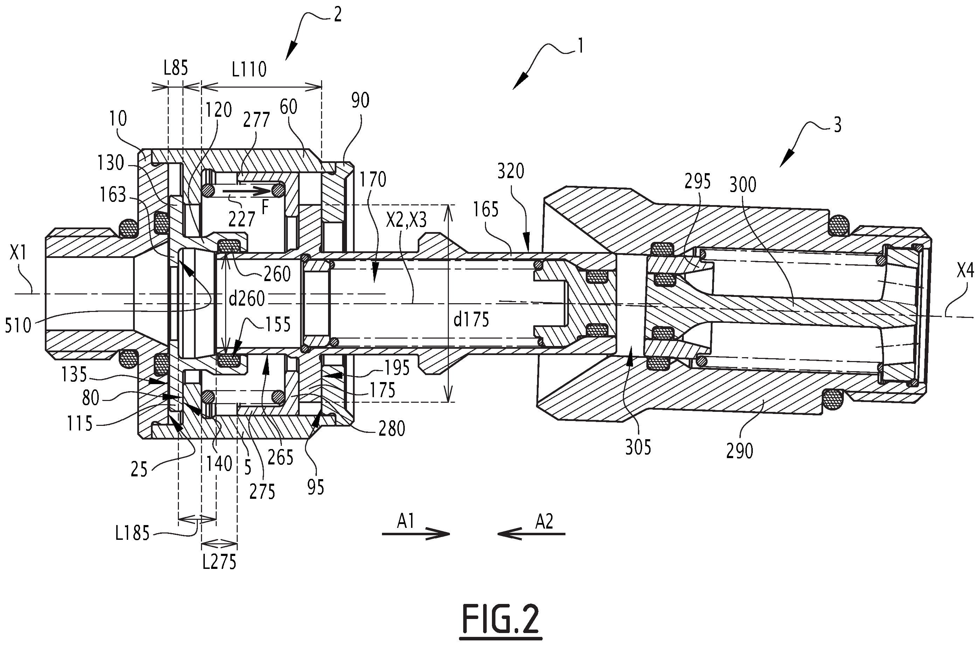

En effet, dans le cas d'un défaut de position radiale entre les axes X2 et X4 comme représenté sur la figure 1, au début de l'accouplement, lorsque l'embout 165 est emmanché dans le corps 290, le déplacement de l'élément de raccord 2 par rapport au corps 290 selon la direction avant A1 et le contact entre une surface de l'embouchure conique 310 et l'extrémité avant 190 de l'embout 165 entraine un déplacement radial de l'embout 165 et de la bride 115 par rapport au corps 5. Les éléments de raccord 2 et 3 atteignent alors la configuration avec compensation radiale de la figure 2 dans laquelle la position radiale de l'embout 165 est adaptée par rapport au corps 5 et au corps 290 par un déplacement radial par rapport à l'axe longitudinal X1, et donc par rapport au conduit interne proximal 45 et à la canalisation 55 qui lui est reliée.

Le déplacement radial de la bride 115 est dans ce mode de réalisation limité par la coopération de l'embase arrière 130 avec la surface radiale interne 68 de la douille 60. La valeur du déplacement radial maximum de la bride 115 dans le corps 5 est considérée depuis une configuration dans laquelle les axes longitudinaux X1 et X2 sont alignés. Dans cet exemple, la valeur du déplacement radial maximum est égale à la moitié de la différence entre un diamètre d85 du volume de réception 85, mesuré perpendiculairement à l'axe longitudinal X1 entre deux points diamétralement opposés du volume de réception 85, et le diamètre d130. La valeur du déplacement radial maximum est, de préférence, égale à 2.5 millimètres.

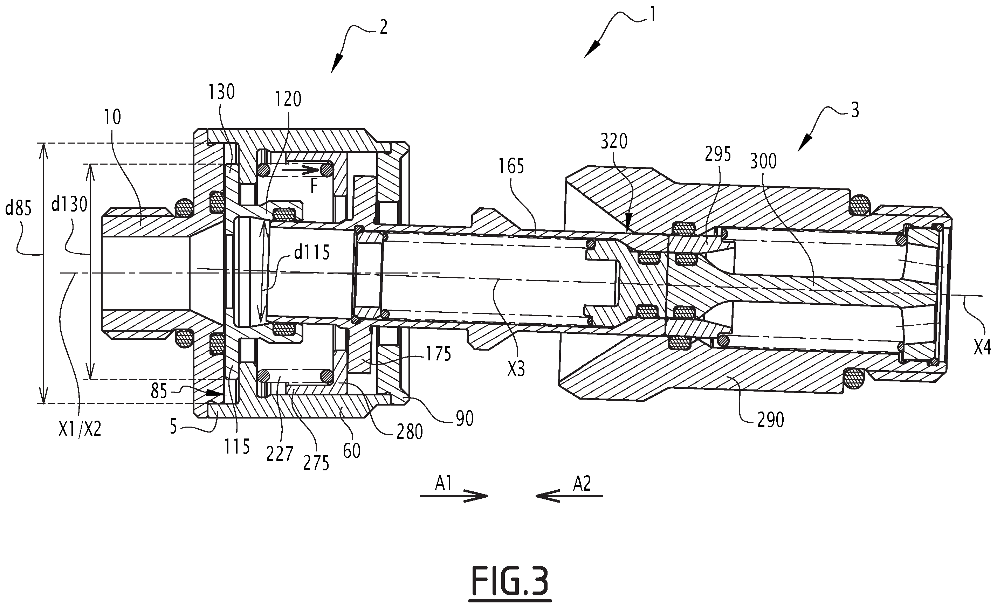

Dans le cas d'un défaut de position angulaire entre les axes X2 et X4 comme représenté sur les figures 1 à 5, lors de la poursuite de l'accouplement, lorsque l'embout 165 poursuit son emmanchement dans le corps 290, le déplacement de l'élément de raccord 2 selon la direction avant A1 par rapport au corps 290 et le contact entre une surface de l'embouchure conique 310 et l'extrémité avant 190 de l'embout 165 entraine un déplacement angulaire de l'embout 165 par rapport au corps 5 et à la bride 115 jusqu'à ce que les axes X3 et X4 soient alignés. L'embout 165 a alors une position inclinée par rapport à la bride 115 dans laquelle l'axe X4 est incliné par rapport à l'axe X2. Les éléments de raccord 2 et 3 atteignent alors une configuration avec compensation angulaire comme représenté sur la figure 3 dans laquelle la position angulaire de l'embout 165 est adaptée par rapport au corps 5 et au corps 290 par un déplacement angulaire par rapport à l'axe longitudinal X1, et donc par rapport au conduit interne proximal 45 et à la canalisation 55 qui lui est reliée.

En cas d'inclinaison de l'embout 165 par rapport au corps 5, la collerette externe 175 de l'embout 165 est inclinée par rapport à la surface interne axiale arrière 95 du couvercle 90 et repousse le deuxième ressort 227 par l'intermédiaire de la bague d'appui 275 dans la direction arrière A2. En d'autres termes, la collerette externe 175 est ponctuellement en contact contre la bague d'appui 275 et ponctuellement en contact contre le couvercle 90.

Le déplacement radial et l'inclinaison de l'embout 165 par rapport au corps 5 peuvent être successifs, l'inclinaison pouvant en variante se produire avant le déplacement radial, ou concomitants.

L'élément de raccord fluidique 2 est alors déplacé selon la direction avant A1, jusqu'à ce que la soupape 130 soit en contact avec le piston 300 et que l'embout 165 soit en contact avec le tiroir 295. La poursuite du déplacement de l'extrémité avant 190 dans le conduit interne 305 déplace la soupape 230 et le tiroir 295 dans leur position d'ouverture pour atteindre une configuration accouplée dans laquelle les canalisations 55 et 335 sont fluidiquement reliées. En d'autres termes, le tiroir 295 est déplacé en position d'ouverture par le corps 5 de l'élément de raccord fluidique 2 et la soupape 230 est déplacée en position d'ouverture par le corps 290 de l'élément de raccord fluidique complémentaire 3 en configuration accouplée. Lors du déplacement du tiroir 295 vers sa position d'ouverture, la surface radiale externe cylindrique 320 vient au contact du joint 315 qui réalise l'étanchéité entre l'embout 165 et le corps 290.

Plus précisément, lors de l'accouplement, la soupape 230 de l'élément de raccord fluidique 2 est repoussée par le piston 300 et le tiroir 295 est repoussé par l'embout 165, de manière à permettre le passage du fluide entre le conduit interne proximal 45 et le conduit interne 305 par l'intermédiaire du conduit interne distal 170. En d'autres termes, lors de l'accouplement, un effort axial de rapprochement des deux corps 5 et 290 est appliqué de sorte à repousser le tiroir 295 et la soupape 230 vers leur position d'ouverture.

Avantageusement, pendant toute la phase d'accouplement, l'effort axial F du ressort 227 est supérieur à l'effort axial d'ouverture du tiroir 295 et de la soupape 290 en configuration accouplée de manière que, dans la séquence d'accouplement, le tiroir 295 et la soupape 290 soient repoussés en position d'ouverture avant que la surface de butée avant 210 ne parvienne en contact avec la surface tronconique 310 et avant que l'embout 165 ne quitte le contact de la surface interne axiale arrière 95, comme illustré par la figure 4.

Avantageusement, un diamètre d315 de contact étanche entre l'embout 165 et le joint 315 de l'élément de raccord fluidique complémentaire 3 est égal au diamètre de contact radial d260 entre le joint 260 et l'embout 165.

En d'autres termes, le diamètre de contact radial d260 est égal à un diamètre de contact radial d315 entre le joint 315 et la surface externe d'étanchéité 265 de l'embout 165, mesuré perpendiculairement à l'axe longitudinal X4 entre deux points de contact entre le joint 315 et la surface radiale externe cylindrique 320 de l'embout 165 diamétralement opposés, lorsque l'élément de raccord fluidique 1 est en configuration accouplée. Le diamètre d315 est égal au diamètre de la surface radiale externe cylindrique 320 de l'extrémité avant 190.

Plus précisément, le diamètre de contact radial d260 est égal à un diamètre de la surface radiale externe cylindrique 320 de l'extrémité avant 190 de l'embout 165, la surface radiale externe cylindrique 320 étant disposée à l'avant de l'ouverture 105 dans toutes les positions de l'embout 165 par rapport au corps 5.

Ainsi l'embout 165 est dit « équilibré » en configuration accouplée, c'est à dire que l'effet d'une pression du fluide transitant dans l'embout 165 et s'appliquant sur l'embout au niveau de chacune des sections d'étanchéité au niveau du joint 260 et du joint 315 ne provoque aucun déplacement longitudinal de l'embout 165 par rapport au corps 5 en configuration accouplée. Cela permet de garantir le contact entre la surface de butée avant 210 et le corps 290 en configuration accouplée et de ne pas soumettre ce contact à des efforts liés à la pression du fluide.

Avantageusement, une portion de l'embout 165 qui dépasse hors du corps 5 comprend une surface de butée avant apte à être axialement en butée avant, selon la direction avant A1, avec l'élément de raccord fluidique complémentaire 3 dans la configuration accouplée de l'élément de raccord 2.

Dans cet exemple, la surface inclinée avant 210 est la surface de butée avant configurée pour être axialement en butée avant contre l'embouchure conique 310. En d'autres termes, la portion de l'embout 165 qui dépasse de l'ouverture 105 dans la direction avant A1 comprend la collerette externe 205.

La surface de butée avant est donc, avantageusement, ménagée sur la collerette externe 205 de l'embout 165 et, avantageusement, complémentaire à la surface conique de l'embouchure conique 310.

Ainsi, la configuration accouplée sans surcourse, représentée sur la figure 4 est atteinte lorsque la collerette externe 205 est en butée avant contre l'embouchure conique 310. Les sections de passage de fluide au niveau de la soupape 230 et du tiroir 295 requises pour l'ensemble de raccordement sont alors atteintes.

Selon les tolérances et la position finale relative des corps 5 et 290 à atteindre le long de l'axe longitudinal X1, l'embout 165, en butée avant contre l'élément de raccord fluidique complémentaire 3, en particulier par l'intermédiaire de la surface inclinée avant 210 de la collerette radiale externe 205, en plus de son inclinaison par rapport à la bride 115, recule par rapport au corps 5 et au conduit interne proximal 45 longitudinalement à l'axe longitudinal X1, selon la direction arrière A2, dans la cavité interne 125, à l'encontre du ressort 227. Ce recul peut provoquer un déplacement radial de la bride 115 dans le corps 5 de manière que l'extrémité arrière 185 de l'embout 165 progresse dans la cavité interne 125. Toute la surface axiale avant 195 est distante de la surface interne axiale arrière 95 du couvercle 90. L'élément de raccord fluidique 2 atteint alors une configuration accouplée avec surcourse représentée sur la figure 5.

Le ressort 227 garantit le contact sur l'avant, selon la direction avant A1, de l'embout 165 contre le corps 290 en configuration accouplée avec ou sans surcourse. Plus précisément, le ressort 227 repousse l'embout 165 dans la direction avant A1 de sorte que la surface inclinée avant 210 est en contact avec l'embouchure conique 310.

Grâce au rappel de l'embout 165 en position neutre réalisé par le ressort 227, une dimension radiale de la surface d'embouchure conique 310 du corps 290 peut être réduite, ce qui permet de gagner en compacité radiale et longitudinale.

Lorsque l'embout 165 recule par rapport à la bride 115 tout en ayant une position inclinée par rapport à l'axe longitudinal X1, l'extrémité arrière 185 de l'embout 165 vient se loger dans la cavité interne 125 au niveau longitudinal de la portion de surface 160, et n'interfère pas avec la bride 115.

La position du joint 260 dans la gorge interne 155 permet le recul de l'embout 165 en position inclinée tout en assurant l'étanchéité entre l'embout 165 et la bride 115.

Le déplacement de l'embout 165, selon la direction arrière A2, depuis la position avancée, est limité par le corps 5 par l'intermédiaire de la bague d'appui 275, le ressort 227 n'étant pas complètement comprimé. En d'autres termes, une distance maximale de recul de l'embout 165 est limitée par la distance axiale L275 et n'est pas limitée par la compression du ressort 227 qui ne forme pas une butée arrière à l'embout 165.

Avantageusement, une distance de déplacement, opposé à la direction avant A1, de l'embout 165 par rapport au conduit interne proximal 45, depuis la position avancée de l'embout 165 lorsque l'axe longitudinal X1 et l'axe longitudinal X3 sont parallèles est supérieure ou égale à la valeur du déplacement radial maximum de la bride 115 par rapport au corps 5 depuis une configuration dans laquelle l'axe longitudinal X1 et l'axe longitudinal X3 sont alignés. Cette distance de déplacement est égale à la distance L185.

La surface externe d'étanchéité cylindrique 265 s'étend, dans cet exemple, sur une longueur supérieure à la distance L185. En particulier, en position avancée de l'embout 165, la surface externe d'étanchéité cylindrique 265 à l'avant du joint d'étanchéité 260 s'étend sur une longueur supérieure à la distance L185. Ainsi, l'étanchéité entre la bride 115 et l'embout 165 est toujours assurée même lorsque l'embout 165 est déplacé longitudinalement par rapport à l'axe longitudinal X1 par rapport au corps 5 et à la bride 115.

Avantageusement, la distance de déplacement L185 est au moins égale à 2.5 millimètres, de préférence au moins égale à 3 millimètres.

Dans cet exemple, la distance maximale de recul de l'embout 165, qui correspond à la distance de déplacement L185, est supérieure ou égale à 3 millimètres.

Le défaut radial admissible entre les éléments de raccord 2 et 3 à accoupler doit être inférieur à la valeur du déplacement radial maximum pour tenir compte d'un éventuel recul de l'embout 165 en position inclinée par rapport à la bride depuis une configuration accouplée sans surcourse à une configuration accouplée avec surcourse.

Lors d'une séquence inverse de désaccouplement, l'embout 165 est mobile par rapport au corps 5 depuis une position inclinée dans laquelle l'embout 165 est incliné par rapport à la bride 115, visible sur la figure 3, jusqu'en position avancée visible sur la figure 2.

L'élément de raccord fluidique 2 est particulièrement avantageux puisqu'il permet de compenser des défauts d'alignement relatifs radiaux et/ou angulaires entre le corps 5 de l'élément de raccord fluidique 2 et le corps 290 de l'élément de l'élément de raccord fluidique complémentaire 3 au début de l'accouplement.

L'élément de raccord fluidique 2 est particulièrement avantageux puisque le conduit interne proximal 45 est indépendant de la position de l'embout 165 par rapport au corps 5, et en particulier de la position longitudinale et radiale de l'embout 165 dans le corps 5. Ainsi, il n'y a pas de sollicitation de la canalisation 55 raccordée au conduit interne proximal 45 lors de l'ajustement de l'embout 165 par rapport au corps 5 lors de l'accouplement, puisque la canalisation 55 reste fixe par rapport au corps 5.

L'élément de raccord fluidique 2 est particulièrement avantageux en ce qu'il présente seulement deux barrières d'étanchéité, les joints 260 et 270, pour trois mobilités possibles de déplacement de l'embout 165 par rapport au corps 5, les mobilités de déplacement possibles étant axiale, angulaire et radiale. De plus, les trois mobilités sont découplées depuis la configuration désaccouplée. En d'autres termes, depuis cette configuration, avec l'embout 165 en position avancée, il est possible d'agir uniquement axialement sur l'embout 165, ou uniquement radialement, ou uniquement angulairement.

En variante, non représentée, le déplacement radial de la bride 115 est limité par la coopération de la jupe 120 avec la collerette interne 70 de la douille 60.

En variante, non représentée, lorsque l'embout 165 ne comprend pas de collerette radiale externe à l'avant de la collerette externe 175, le contact entre l'embout 165 et le corps 290 est garanti entre une surface avant de l'extrémité avant 190 et le tiroir 295, ou entre la soupape 230 et le piston 300, une butée au rapprochement se faisant lorsque le ressort 325, respectivement le ressort 250, est comprimé au maximum.

En variante, non représentée, l'embout 165 est monté étanche autour de la bride 115 et non dans la bride 115. La surface d'étanchéité de l'embout 165 est donc une surface cylindrique interne.

En variante, non représentée, l'élément de raccord fluidique 2 ne comprend pas de bague d'appui. Dans ce cas, de préférence, le ressort 227 est un ressort conique qui prend appui directement sur la surface axiale arrière 185 de la collerette externe 175 de l'embout 165. La géométrie conique du ressort 227, quand il est comprimé, tend à exercer un effort sur l'embout 165 qui a à la fois une composante axiale vers l'avant et une composante radiale, perpendiculaire à l'axe longitudinal X1, configurée pour, en configuration désaccouplée, recentrer l'embout 165 dans une position avancée neutre où les axes longitudinaux X1 et X3 sont alignés.

En variante, non représentée, la bride 115 est disposée dans le volume interne 112 à l'avant de la collerette interne 70. La bride 115 coopère pour son déplacement radial avec la surface interne axiale arrière 95 du couvercle 90. Le corps 5 est réalisé en trois parties, avec deux parties soudées, la partie proximale 10 et le couvercle 10, prenant en sandwich la douille 60 avec collerette interne 70. Le ressort 227 est en appui sur le corps 5 et sur la première collerette externe 175 de l'embout 165 qui est disposée dans le volume de réception 85. Le joint 260 est disposé, uniquement radialement, entre la bride 115 et une surface externe cylindrique d'étanchéité de l'embout 165 disposée à l'avant, selon la direction avant A1, de la collerette externe 175. Le joint 270 est logé dans une gorge arrière ménagée sur la surface interne axiale arrière 95 du couvercle 90 et est en contact avec la surface avant 140 d'une embase avant de la bride 115.

En variante, non représentée, le corps 5 est réalisé en plusieurs parties vissées plutôt que soudées.

En variante non représentée, la collerette radiale externe 205 est formée sur une extension vissée à l'embout 165 en avant de la collerette externe 175. L'extrémité avant 190 comprend une surface radiale externe cylindrique 320 disposée à l'avant de l'ouverture 105 dans toutes les positions de l'embout 165 par rapport au corps 5. En particulier, la surface radiale externe cylindrique 320 s'étend de la collerette radiale externe 205 à la face avant de l'embout 165 et est de diamètre constant.

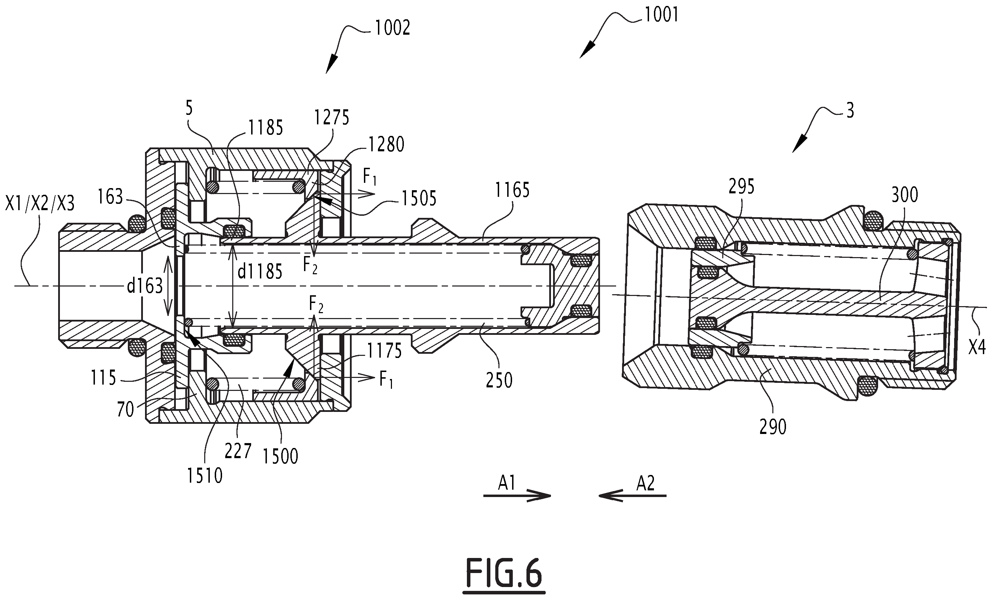

Les figures 6 à 8, illustrent un raccord fluidique 1001 selon un deuxième mode de réalisation de l'invention, le raccord fluidique 1001 étant identique au raccord fluidique 1 du premier mode de réalisation sauf pour les caractéristiques décrites ci-après. Les signes de référence pour le raccord fluidique 1001 correspondent à ceux du raccord fluidique 1 lorsque que l'élément référencé est inchangé. Les signes de référence sont augmentés de 1000 lorsqu'ils désignent des éléments similaires mais modifiés dans le raccord fluidique 1001.

Dans ce deuxième mode de réalisation, le ressort 250 prend appui sur une surface interne avant 1510 de la collerette radiale interne 163.

La collerette externe 1175 comprend une surface arrière inclinée 1500 qui coopère avec une surface avant inclinée 1505 de la collerette interne 1280 de la bague d'appui 1275, ce qui permet de réaligner les axes longitudinaux X1 et X3 en configuration désaccouplée, lorsque le ressort 227 repousse la bague d'appui 1275 dans la direction avant A1. En effet, l'effort du ressort 227 sur la collerette externe 1175, grâce à la surface arrière inclinée 1500 et à la surface avant inclinée 1505, comprend une composante axiale F1 vers l'avant et une composante radiale F2, perpendiculaire à l'axe longitudinal X1, configurée pour, en configuration désaccouplée, recentrer l'embout 165 dans une position avancée neutre. La surface arrière inclinée 1500 et la surface avant inclinée 1505 sont des surfaces tronconiques divergentes dans la direction avant A1.

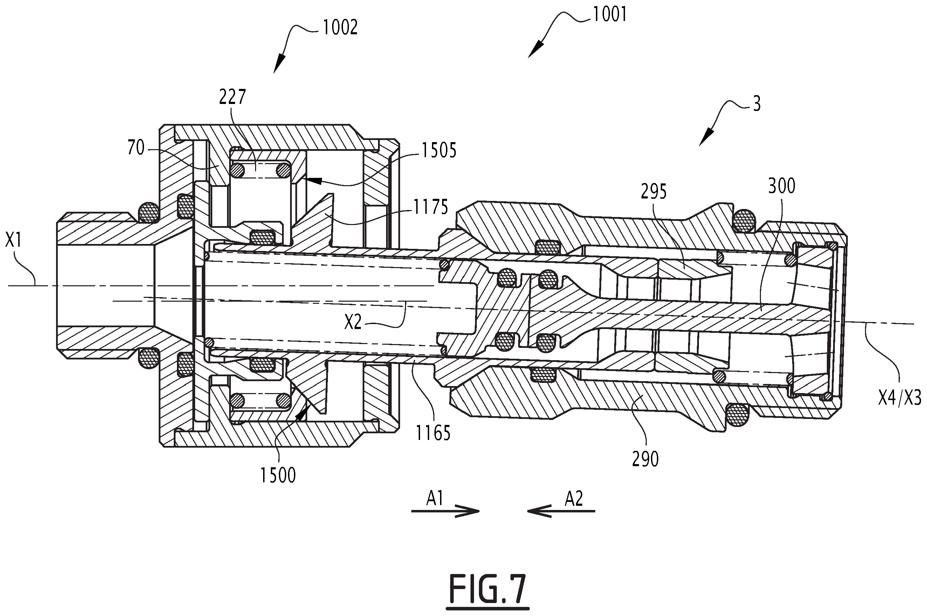

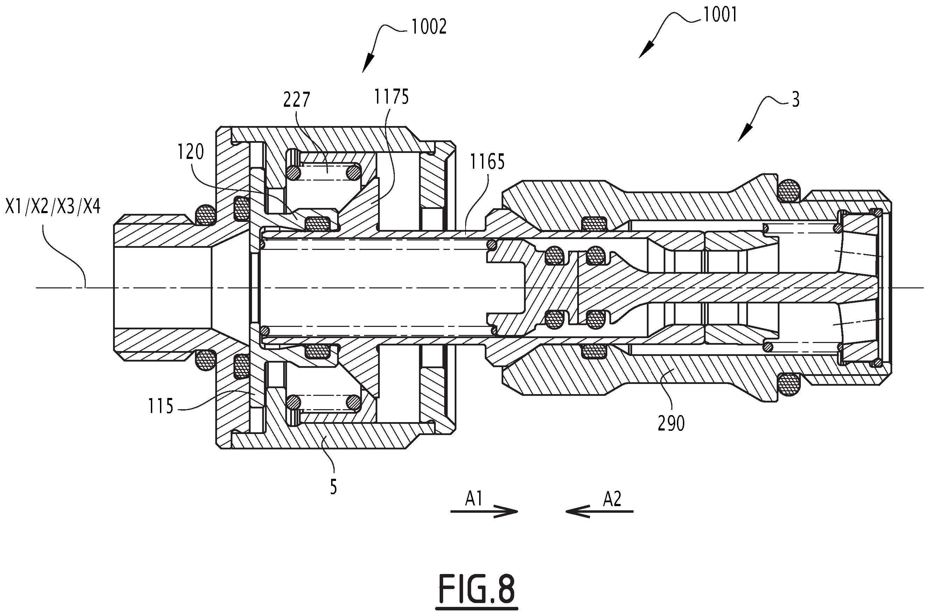

La butée arrière au déplacement axial de l'embout 1165, selon la direction arrière A2, par rapport au corps 5 est réalisée, selon l'inclinaison de l'embout 165 dans la bride 115, par l'intermédiaire de bague d'appui 1275 en butée arrière contre la collerette interne 70, comme représenté sur la figure 7, et/ou de la collerette radiale externe 1175 en butée arrière contre la jupe 120, comme représenté sur la figure 8.

En variante non représentée, du fait qu'un diamètre interne d1185 de l'extrémité arrière 1185 de l'embout 1165 est strictement supérieur à un diamètre interne d163 de la collerette radiale interne 163, mesuré perpendiculairement à l'axe longitudinal X2 entre deux points radialement opposés de la surface radiale interne de la collerette radiale interne 163, la butée arrière au déplacement axial de l'embout 1165, selon la direction arrière A2, par rapport au corps 5 est réalisée par contact de l'extrémité arrière 185 de l'embout 165 avec la collerette radiale interne 163.

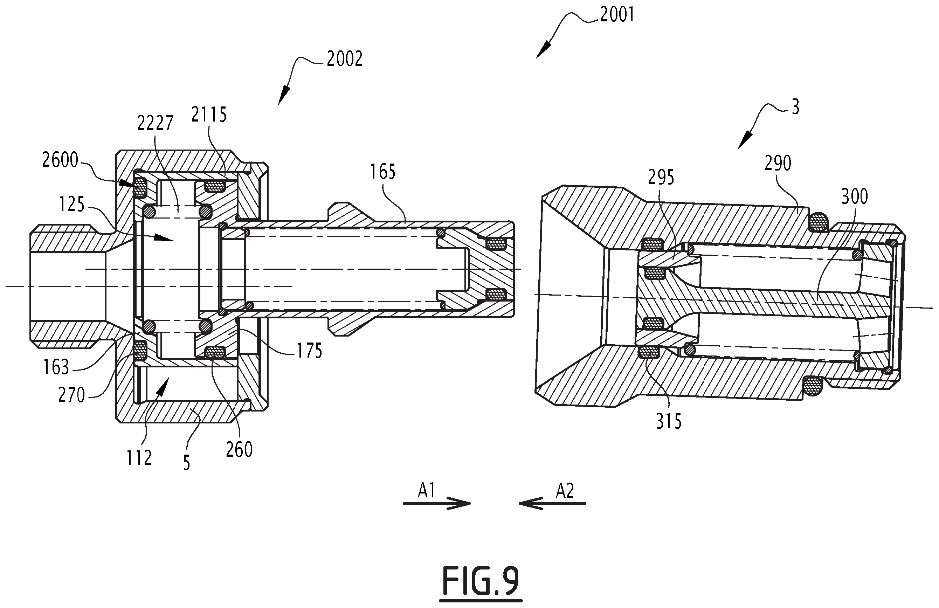

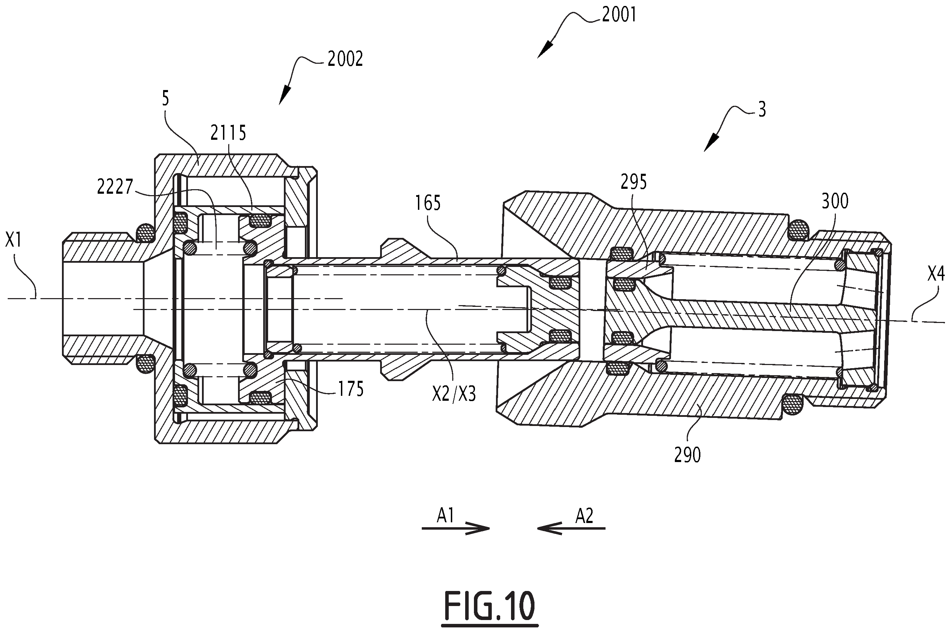

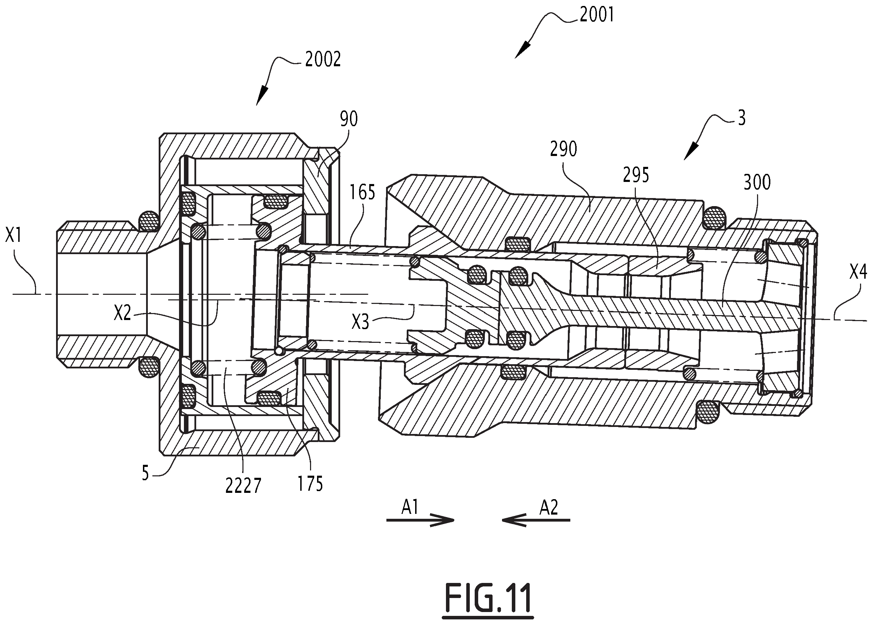

Les figures 9 à 11, illustrent un raccord fluidique 2001 selon un troisième mode de réalisation de l'invention, le raccord fluidique 2001 étant identique au raccord fluidique 1 du premier mode de réalisation sauf pour les caractéristiques décrites ci-après. Les signes de référence pour le raccord fluidique 2001 correspondent à ceux du raccord fluidique 1 lorsque que l'élément référencé est inchangé. Les signes de référence sont augmentés de 2000 lorsqu'ils désignent des éléments similaires mais modifiés dans le raccord fluidique 2001.

Dans le troisième mode de réalisation, le ressort 2227 et la collerette externe 175 sont disposés dans la cavité interne 125 de la bride 2115, le ressort 2227 étant en appui arrière contre la bride 2115, le joint 260 étant logé dans l'embout 165, au niveau d'une gorge externe ménagée sur une surface radiale externe de la collerette externe 175.

Plus précisément, le ressort 2227 est logé dans la cavité interne 125 de la bride 2115, au contact arrière avec la surface interne avant de la collerette radiale interne 163 de la bride 2115 et repousse l'embout 165 en contact avant directement contre le couvercle 90. En d'autres termes, il n'y a pas de bague d'appui. Ainsi, en position avancée, la collerette externe 175 est en butée avant contre le corps 5, plus précisément contre la surface interne axiale arrière 95 du couvercle 90.

Le joint d'étanchéité 260 entre la jupe 120 de la bride 2115 et l'embout 165 est porté par la collerette externe 175 de l'embout 165.

Le joint 270 est logé dans une gorge 2600 de la bride 2115.

L'embout 165 n'est pas « équilibré ». Les diamètres de contact des joints 260 et 315 avec l'embout 165 en configuration accouplée sont en effet tels que la pression du fluide présent dans l'élément de raccord 2002 tend à repousser l'embout 165 vers l'avant du corps 5 selon la direction avant A1.

En variante non représentée, la surface axiale avant 195 de la collerette externe 175 est, en position avancée, en butée avant contre une surface interne axiale arrière de la bride 2115, cette surface étant fixe en position par rapport au conduit distal 45 le long de l'axe longitudinal X1 du fait que la bride 2115 n'a pas de possibilité de déplacement par rapport au corps le long de l'axe longitudinal X1.

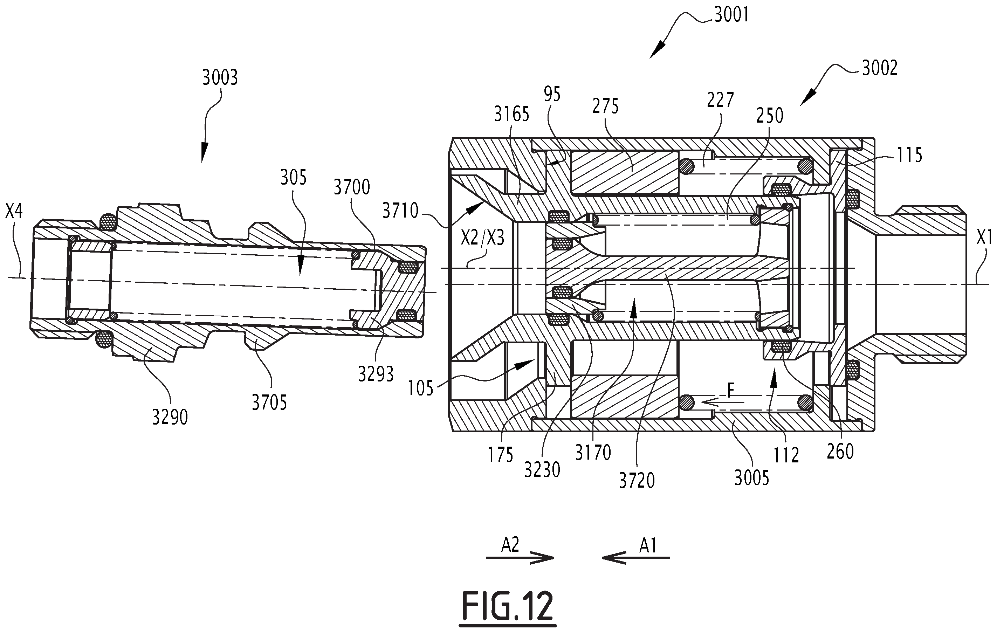

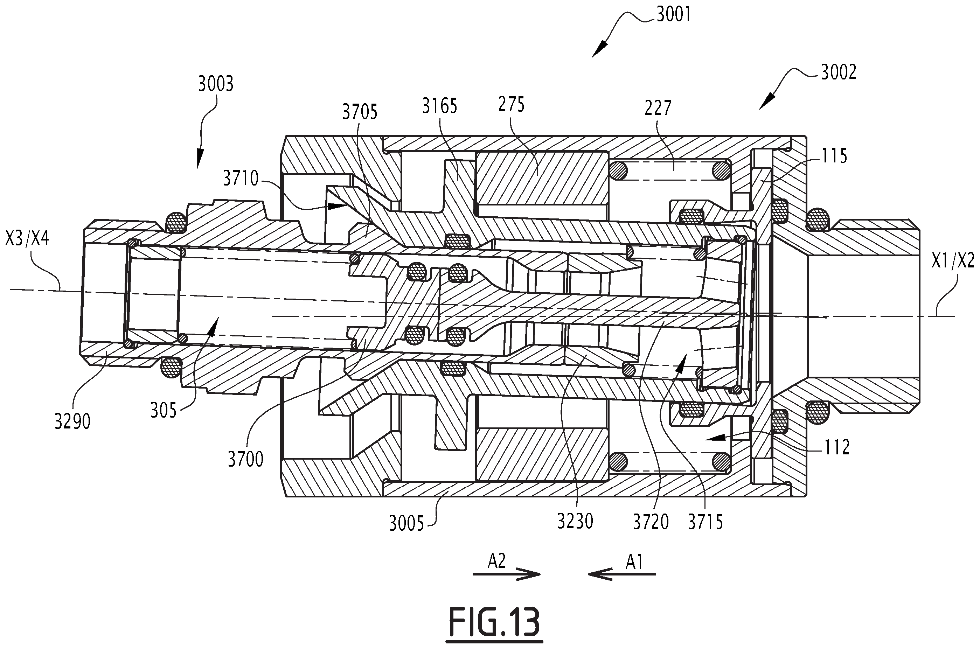

Les figures 12 et 13, illustrent un raccord fluidique 3001 selon un quatrième mode de réalisation de l'invention, le raccord fluidique 3001 étant identique au raccord fluidique 1 du premier mode de réalisation sauf pour les caractéristiques décrites ci-après. Les signes de référence pour le raccord fluidique 3001 correspondent à ceux du raccord fluidique 1 lorsque que l'élément référencé est inchangé. Les signes de référence sont augmentés de 3000 lorsqu'ils désignent des éléments similaires mais modifiés dans le raccord fluidique 3001.

Le raccord fluidique 3001, selon le quatrième mode de réalisation de l'invention, comprend un élément de raccord fluidique 3002 femelle et un élément de raccord fluidique complémentaire mâle 3003. Sur la figure 13 l'élément de raccord fluidique 3002 reçoit en emmanchement l'élément de raccord fluidique complémentaire 3003, en configuration accouplée. Sur la figure 12 l'élément de raccord fluidique complémentaire 3003 n'est pas reçu pas en emmanchement par l'élément de raccord fluidique 3002, en configuration désaccouplée.

L'élément de raccord fluidique complémentaire 3003 comprend un clapet comprenant une soupape 3700 montée mobile dans le conduit interne 305 entre une position d'ouverture du conduit interne 305 et une position de fermeture du conduit interne 305.

L'élément de raccord fluidique complémentaire 3003 comprend une collerette externe 3705 qui s'étend en saillie du corps 3290 perpendiculairement à l'axe longitudinal X4 en direction opposée de l'axe longitudinal X4.

L'embout 3165, la bride 115, la bague d'appui 275 et le ressort 227 sont logés dans le volume interne 112 du corps 3005. En particulier, l'embout 3165 ne dépasse pas hors du corps 3005 le long de l'axe longitudinal X1 mais traverse l'ouverture 105 et dépasse partiellement hors du volume interne 112 dans la direction avant A1.

Le conduit interne distal 3170 est configuré pour recevoir en emmanchement le corps 3290 dans une configuration accouplée. Le conduit interne distal 3170 débouche de l'embout 3165, selon la direction avant A1, par une surface de butée avant 3710 formée par une embouchure conique et configurée pour recevoir en butée avant la collerette externe 3705 en configuration accouplée.

La soupape 3230 de l'élément de raccord fluidique 3002 est formée d'un tiroir annulaire. La soupape 3230 est montée mobile dans le conduit interne distal 3170 autour d'un piston 3720 et par rapport au corps 3005 entre une position de fermeture du conduit interne distal 3170 et une position d'ouverture conduit interne distal 3170. Le piston 3720 est centré sur l'axe longitudinal X1 et monté dans le corps 3005 sans possibilité de déplacement longitudinal, au jeu près.

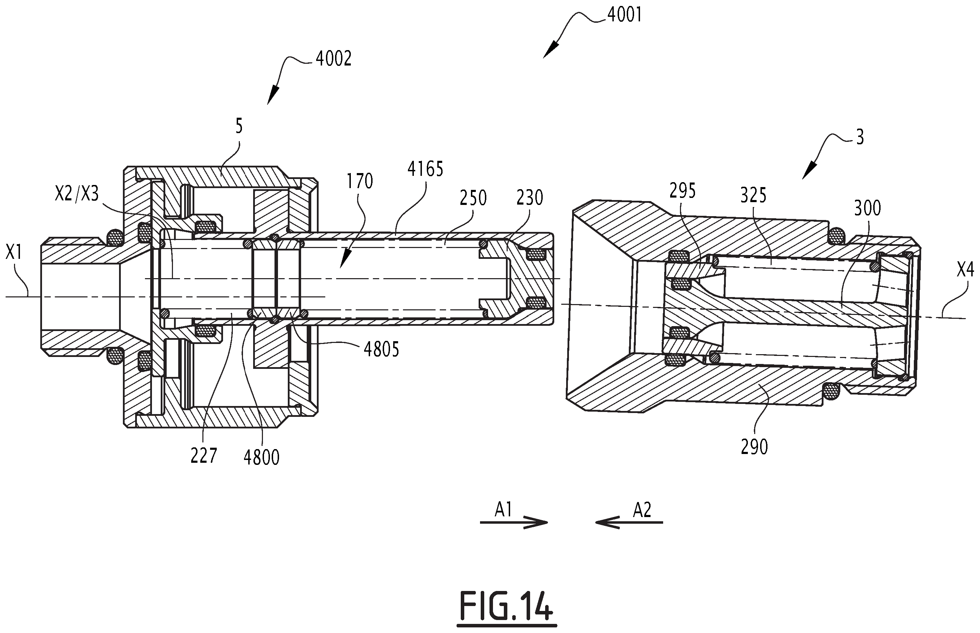

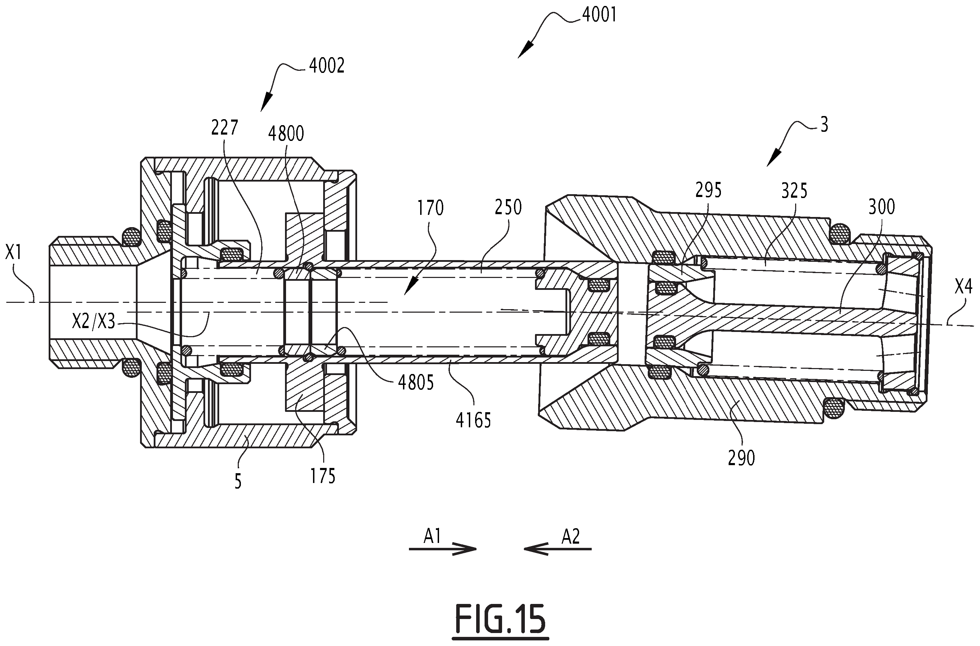

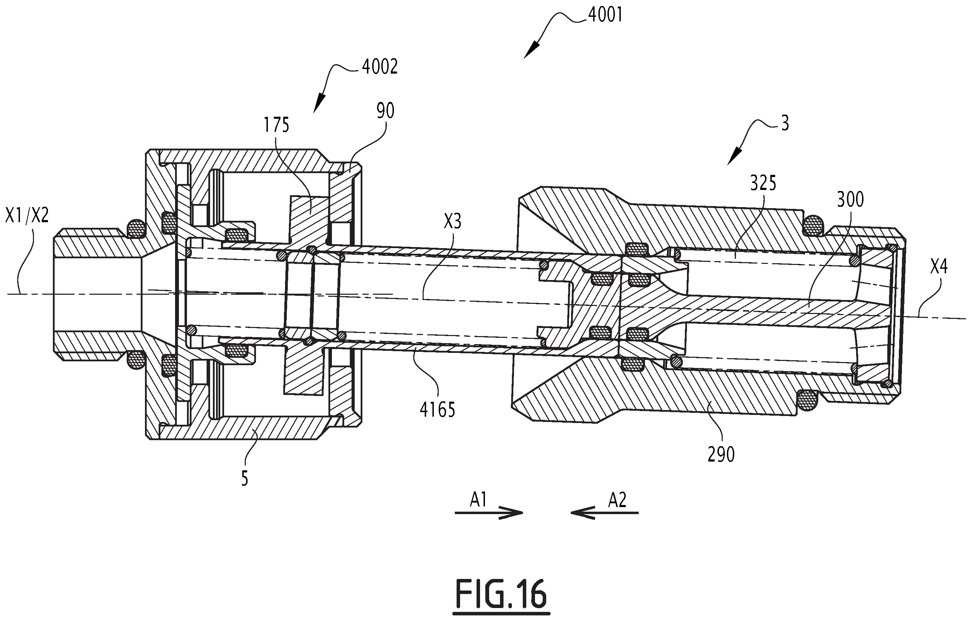

Les figures 14 à 18, illustrent un raccord fluidique 4001 selon un cinquième mode de réalisation de l'invention, le raccord fluidique 4001 étant identique au raccord fluidique 1 du premier mode de réalisation sauf pour les caractéristiques décrites ci-après. Les signes de référence pour le raccord fluidique 4001 correspondent à ceux du raccord fluidique 1 lorsque que l'élément référencé est inchangé. Les signes de référence sont augmentés de 4000 lorsqu'ils désignent des éléments similaires mais modifiés dans le raccord fluidique 4001.

L'embout 4165 ne présente pas de collerette radiale externe à l'avant de la collerette externe 175. Le ressort 227 est disposé dans la bride 115 et dans l'embout 4165 et est interposé entre la bride 115 et une bague d'appui proximale 4800 montée dans le conduit interne distal 170. Le ressort 227 est distinct du ressort 250 repoussant la soupape 230 et reposant sur une autre bague distale 4805, à l'avant du ressort 227. Ces bagues 4800 et 4805 sont maintenues en position par rapport à l'embout 4165 le long de l'axe longitudinal X3, en butée contre un segment d'arrêt.

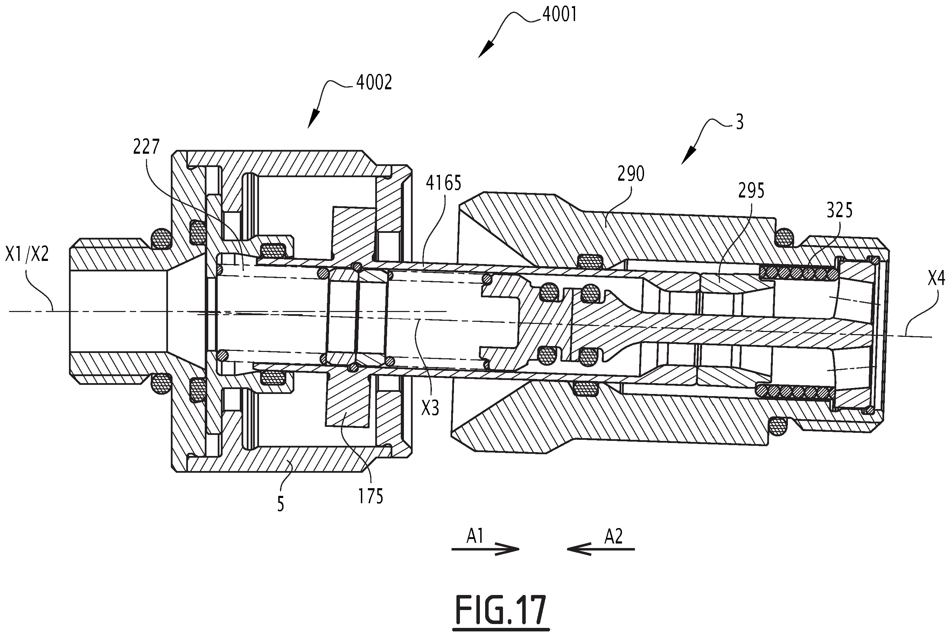

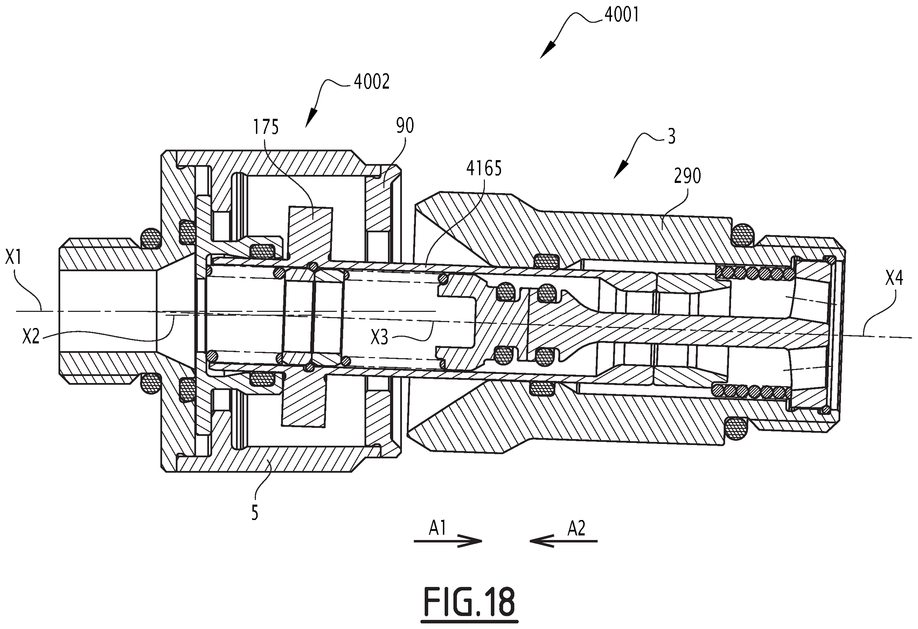

Lors de l'accouplement, lorsque des spires du ressort 325 du tiroir 295 parviennent en configuration spires jointives, comme représenté sur la figure 17, mais que le corps 290 et le corps 5 doivent encore être rapprochés le long de l'axe d'emmanchement, l'embout 4165 est déplacé à l'encontre du ressort 227 vers l'arrière de l'élément de raccord 4001, comme représenté sur la figure 18.

En variante, non représentée, la bague d'appui proximale 4800 et/ou la bague distale 4805 sont remplacées par une collerette interne de l'embout 4165.

Toute caractéristique décrite ci-avant pour un mode de réalisation ou une variante est applicable aux autres modes de réalisation et variantes décrits ci-avant, pour autant que cela est techniquement possible.

## Revendications

1. Elément de raccord fluidique (2; 1002; 2002; 3002; 4002), comprenant :
- un corps (5; 3005), s'étendant suivant un premier axe longitudinal (X1), le corps (5; 3005) délimitant :
∘ un conduit interne proximal (45), centré sur le premier axe longitudinal (X1) et destiné à être au contact d'un fluide transitant dans l'élément de raccord fluidique (2; 1002; 2002; 3002; 4002),
∘ une ouverture (105), centrée sur le premier axe longitudinal (X1), et
∘ un volume interne (112), centré sur le premier axe longitudinal (X1), débouchant hors du corps (5; 3005) par l'ouverture (105), suivant une direction avant (A1) parallèle au premier axe longitudinal (X1), et débouchant dans le conduit interne proximal (45), suivant une direction arrière (A2) opposée à la direction avant (A1), le conduit interne proximal (45), l'ouverture (105) et le volume interne (112) ayant une position fixe les uns par rapport aux autres,
- une bride (115; 2115), centrée sur un deuxième axe longitudinal (X2) parallèle au premier axe longitudinal (X1), la bride (115; 2115) étant disposée dans le volume interne (112) du corps (5; 3005) avec une possibilité de déplacement par rapport au corps (5; 3005) uniquement radialement au premier axe longitudinal (X1), ce déplacement radial étant guidé par coopération axiale de la bride (115; 2115) avec le corps (5; 3005) ;
- un embout (165; 1165; 3165; 4165), monté avec la bride (115; 2115) de sorte à être solidaire avec la bride (115; 2115) en déplacement radialement au premier axe longitudinal (X1), avec une possibilité d'inclinaison de l'embout (165; 1165; 3165; 4165) par rapport à la bride (115; 2115), par rapport au deuxième axe longitudinal (X2), l'embout (165; 1165; 3165; 4165) traversant l'ouverture (105) et dépassant partiellement hors du volume interne (112) selon la direction avant (A1), l'embout (165; 1165; 3165; 4165) étant configuré pour être accouplé fluidiquement avec un élément de raccord fluidique complémentaire (3; 3003), l'embout (165; 1165; 3165; 4165) comprenant :
∘ un conduit interne distal (170; 3170), traversant l'embout (165; 1165; 3165; 4165) en étant centré sur un troisième axe longitudinal (X3), et
∘ une première collerette externe (175; 1175), disposée dans le volume interne (112) du corps (5; 3005) ;
- une soupape (230; 3230), montée dans le conduit interne distal (170; 3170) en étant mobile par rapport à l'embout (165; 1165; 3165; 4165) selon le troisième axe longitudinal (X3), entre une position de fermeture, où la soupape (230; 3230) ferme le conduit interne distal (170; 3170), et une position d'ouverture, où la soupape (230; 3230) ouvre le conduit interne distal (170; 3170), la soupape (230; 3230) étant en position de fermeture dans une configuration désaccouplée de l'élément de raccord fluidique (2; 1002; 2002; 3002; 4002) ;
- un premier ressort (250), configuré pour repousser la soupape (230; 3230) vers la position de fermeture ;
- un premier joint d'étanchéité (260), interposé radialement entre l'embout (165; 1165; 3165; 4165) et la bride (115; 2115) pour assurer un contact étanche entre l'embout (165; 1165; 3165; 4165) et la bride (115; 2115) dans toutes les positions de l'embout (165; 1165; 3165; 4165) par rapport à la bride (115; 2115) ; et
- un deuxième joint d'étanchéité (270), interposé axialement entre la bride (115; 2115) et le corps (5; 3005), pour assurer un contact étanche entre la bride (115; 2115) et le corps (5 ; 3005) dans toutes les positions de la bride (115; 2115) par rapport au corps (5 ; 3005);
l'élément de raccord fluidique (2 ; 1002 ; 2002 ; 3002) étant **caractérisé en ce que** :
- l'embout (165; 1165; 3165; 4165) est mobile par rapport au corps (5; 3005) depuis une position inclinée dans laquelle l'embout est incliné par rapport à la bride (115 ; 2115) jusqu'à une position avancée, dans laquelle :
∘ le troisième axe longitudinal (X3) est parallèle au premier axe longitudinal (X1), et
∘ une surface axiale avant (195) de la première collerette externe (175; 1175) est en butée avant contre une surface interne axiale arrière (95) de l'élément de raccord fluidique dont la position le long du premier axe longitudinal (X1) est fixe par rapport au conduit interne proximal (45), l'embout (165; 1165; 3165; 4165) étant en position avancée dans la configuration désaccouplée ;
- l'élément de raccord fluidique (2 ; 1002 ; 2002 ; 3002 ; 4002) comprend un deuxième ressort (227 ; 2227), configuré pour repousser l'embout (165; 1165; 3165; 4165) par rapport au corps (5; 3005) vers la position avancée de l'embout (165; 1165; 3165; 4165), le deuxième ressort (227 ; 2227) étant en appui arrière sur une surface d'appui appartenant à l'un parmi le corps (5; 3005) et la bride (115; 2115), la surface d'appui ayant une position fixe par rapport au conduit interne proximal (45) le long du premier axe longitudinal (X1) ; et
- le montage de l'embout (165; 1165; 3165; 4165) avec la bride (115; 2115) autorise un déplacement de l'embout (165; 1165; 3165; 4165) par rapport au conduit interne proximal (45), selon la direction arrière (A2) le long du premier axe longitudinal (X1), à l'encontre du deuxième ressort (227 ; 2227), depuis la position avancée.

2. Elément de raccord fluidique (2; 1002; 2002; 3002), selon la revendication précédente, dans lequel un effort (F) du deuxième ressort (227 ; 2227) est appliqué sur l'embout (165 ; 1165; 3165) à travers la première collerette externe (175 ; 1175).

3. Elément de raccord fluidique (1002), selon la revendication précédente, dans lequel l'effort (F) exercé par le deuxième ressort (227) sur l'embout (165) comprend :
- une composante axiale (F1), parallèle au premier axe longitudinal (X1), et
- une composante radiale (F2), perpendiculaire au premier axe longitudinal (X1), configurée pour, en configuration désaccouplée, recentrer l'embout (165) dans une position neutre dans laquelle le premier axe longitudinal (X1) et le troisième axe longitudinal (X3) sont alignés.

4. Elément de raccord fluidique (2; 1002; 2002; 3002; 4002), selon l'une quelconque des revendications précédentes, dans lequel l'embout (165; 1165; 3165; 4165) est disposé dans une cavité interne (125) de la bride (115; 2115), le premier joint d'étanchéité (260) étant en contact radial étanche avec une surface externe d'étanchéité (265) de l'embout (165; 1165; 3165; 4165), centrée sur le troisième axe longitudinal (X3), et avec une surface interne (145) de la bride (115; 2115), centrée sur le deuxième axe longitudinal (X2) et délimitant la cavité interne (125).

5. Elément de raccord fluidique (2; 1002; 3002; 4002), selon la revendication précédente, dans lequel le premier joint d'étanchéité (260) est logé dans une gorge interne (155) de la bride (115) ménagée dans une surface cylindrique (150) de la surface interne (145) de la bride (115), un diamètre interne (d115) de la surface cylindrique (150) étant inférieur à un diamètre interne (d115)de la surface interne (145) de la bride (115) en arrière de la surface cylindrique (150).

6. Elément de raccord fluidique (2; 1002; 3002; 4002), selon l'une quelconque des revendications 4 ou 5, dans lequel la première collerette externe (175; 1175) est disposée hors de la bride (115), un diamètre de contact radial (d260) entre le premier joint d'étanchéité (260) et l'embout (165; 1165; 3165; 4165) étant inférieur à un diamètre externe (d175) de la première collerette externe (175; 1175).

7. Elément de raccord fluidique (2; 1002; 3002), selon l'une quelconque des revendications précédentes, dans lequel le deuxième ressort (227) est disposé dans le volume interne (112), hors de la bride (115) et hors de l'embout (165; 1165; 3165).

8. Elément de raccord fluidique (2; 1002; 3002; 4002), selon l'une quelconque des revendications précédentes, dans lequel la bride (115) comprend :
- une embase arrière (130) qui coopère axialement, pour le guidage du déplacement radial de la bride (115) dans le corps (5; 3005), avec une première surface interne axiale avant (25) du corps (5; 3005) et avec une première surface interne axiale arrière (80) formée sur une collerette radiale interne (70) du corps (5; 3005), et
- une jupe avant (120) qui s'étend dans la direction avant (A1) depuis l'embase arrière (130), le premier joint d'étanchéité (260) étant logé dans une gorge interne (155) de la jupe avant (120), la première collerette externe (175; 1175) étant disposée à l'avant de la jupe avant (120).

9. Elément de raccord fluidique (2002), selon la revendication 4, dans lequel le deuxième ressort (2227) et la première collerette externe (175) sont disposés dans la cavité interne (125) de la bride (2115), le deuxième ressort (2227) étant en appui arrière contre la bride (2115), le premier joint d'étanchéité (260) étant logé dans l'embout (165), au niveau d'une surface radiale externe de la première collerette externe (175).

10. Elément de raccord fluidique (2; 1002; 2002; 3002; 4002), selon l'une quelconque des revendications précédentes, dans lequel, en position avancée de l'embout (165; 1165; 3165; 4165), la butée avant de l'embout (165; 1165; 3165; 4165) est réalisée contre une surface axiale arrière (95) du corps (5; 3005).

11. Elément de raccord fluidique (2; 1002; 2002), selon l'une quelconque des revendications précédentes, dans lequel une portion de l'embout (165; 1165) qui dépasse de l'ouverture (105) dans la direction avant (A1) comprend une deuxième collerette radiale externe (205) avec une surface de butée avant (210) apte à être axialement en butée avant, selon la direction avant (A1), avec l'élément de raccord fluidique complémentaire (3) dans une configuration accouplée de l'élément de raccord fluidique.

12. Elément de raccord fluidique (2; 1002; 2002; 3002; 4002), selon l'une quelconque des revendications précédentes, dans lequel, depuis la position avancée de l'embout (165; 1165; 3165; 4165) en configuration désaccouplée, une distance de déplacement (L185) selon la direction arrière (A2), de l'embout (165; 1165; 3165; 4165) par rapport au conduit interne proximal (45), est supérieure ou égale à la valeur d'un déplacement radial maximum de la bride (115 ; 2115) par rapport au corps (5; 3005) depuis une configuration dans laquelle le premier axe longitudinal (X1) et le troisième axe longitudinal (X3) sont alignés, la distance de déplacement (L185) étant de préférence au moins égale à 2.5 millimètres, de préférence au moins égale à 3 millimètres.

13. Elément de raccord fluidique (2; 1002; 4002), selon l'une quelconque des revendications précédentes, dans lequel, un diamètre de contact radial (d260) entre le premier joint d'étanchéité (260) et l'embout (165; 1165; 4165) est égal à un diamètre d'une surface radiale externe cylindrique (320) d'une extrémité avant (190) de l'embout (165; 1165; 4165), la surface radiale externe cylindrique (320) étant configurée pour coopérer de manière étanche avec l'élément de raccord fluidique complémentaire (3) et étant disposée à l'avant de l'ouverture (105) dans toutes les positions de l'embout (165; 1165; 4165) par rapport au corps (5).

14. Raccord fluidique (1 ; 1001 ; 2001 ; 3001 ; 4001) comprenant un élément de raccord fluidique (2 ; 1002; 2002; 3002 ; 4002) selon l'une quelconque des revendications précédentes et un élément de raccord fluidique complémentaire (3; 3003) comprenant un corps (290 ; 3290) délimitant un conduit interne (305) et un clapet (295, 3700) mobile dans le conduit interne (305) de l'élément de raccord fluidique complémentaire (3; 3003) entre une position de fermeture et une position d'ouverture du conduit interne (305) de l'élément de raccord fluidique complémentaire (3; 3003), le clapet (295, 3700) étant déplacé en position d'ouverture par le corps (5 ;3005) de l'élément de raccord fluidique (2 ; 1002 ; 2002 ; 3002 ; 4002) et la soupape (230 ; 3230) étant déplacée en position d'ouverture par le corps (290 ; 3290) de l'élément de raccord fluidique complémentaire (3; 3003) en configuration accouplée.

15. Raccord fluidique (1 ; 1001 ; 2001 ; 3001 ; 4001) selon la revendication 14, dans lequel un effort (F) axial du deuxième ressort (227 ; 2227) est supérieur à un effort axial d'ouverture du clapet (295 ; 3700) et de la soupape (3230 ; 230) en configuration accouplée.
